(19) Europäisches Patentamt
European Patent Office
Office européen des brevets

(11) EP 4 328 997 A1

(12) # EUROPEAN PATENT APPLICATION
published in accordance with Art. 153(4) EPC

(43) Date of publication:
**28.02.2024 Bulletin 2024/09**

(21) Application number: **22791697.0**

(22) Date of filing: **18.04.2022**

(51) International Patent Classification (IPC):
***H01M 4/131*** *(2010.01)* ***H01M 4/1391*** *(2010.01)*
***H01M 4/62*** *(2006.01)*

(52) Cooperative Patent Classification (CPC):
**H01M 4/131; H01M 4/1391; H01M 4/62;**
Y02E 60/10

(86) International application number:
**PCT/JP2022/018010**

(87) International publication number:
**WO 2022/224925 (27.10.2022 Gazette 2022/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.04.2021 JP 2021070315**

(71) Applicants:
- **Toyo Ink SC Holdings Co., Ltd.**
**Tokyo 104-8377 (JP)**
- **TOYOCOLOR CO., LTD.**
**Tokyo, 104-8381 (JP)**

(72) Inventor: **AOTANI, Yu**
**Tokyo 104-8381 (JP)**

(74) Representative: **Becker, Eberhard**
**Becker Kurig & Partner**
**Patentanwälte mbB**
**Bavariastraße 7**
**80336 München (DE)**

(54) **CONDUCTIVE MATERIAL DISPERSION, SECONDARY BATTERY ELECTRODE COMPOSITION USING SAME, ELECTRODE FILM, AND SECONDARY BATTERY**

(57) Provided is a conductive material dispersion containing: a conductive material; a polymer including aliphatic hydrocarbon structural units and nitrile group-containing structural units; and a dispersion medium, the conductive material being at least one selected from a group consisting of carbon nanotubes and acetylene black. The Mooney viscosity ($ML_{1+4}$ at 100°C) of the polymer is 20-80 inclusive. The aliphatic hydrocarbon structural units include alkylene structural units, and the content of the aliphatic hydrocarbon structural units relative to the mass of the polymer is at least 40 mass% but less than 85 mass%. The content of the nitrile group-containing structural units relative to the mass of the polymer is 15-50 mass% inclusive. The product (X×Y) of the complex elastic modulus X (Pa) and the phase angle Y (°) of the conductive material dispersion according to dynamic viscoelasticity measurement is 30-1,700 inclusive.

EP 4 328 997 A1

## Description

### Technical Field

The embodiment of the present invention relates to a conductive material dispersion, a secondary battery electrode composition using the same, an electrode film, and a secondary battery.

### Background Art

Secondary batteries such as lithium ion secondary batteries have properties such as a small size, a light weight, a high energy density, and an ability to be repeatedly charged and discharged. Due to such properties, secondary batteries are used in a wide range of applications. In the field of secondary batteries, particularly, for positive electrodes with poor conductivity, when a carbon material such as fine carbon nanotubes with excellent conductivity or acetylene black with a well-developed structure is used in a well-dispersed state as a conductive material, since better properties for a positive electrode are more likely to be exhibited, improving properties of a secondary battery by dispersing these conductive materials using a dispersible polymer or the like has been studied.

For example, Patent Literature 1 reports an invention in which a copolymer (for example, hydrogenated nitrile rubber) having an alkylene structural unit and a nitrile group-containing monomer unit and having a Mooney viscosity ($ML_{1+4}$, 100°C) of 40 or less is used as a secondary battery electrode binder composition.

In addition, in Patent Literature 2, a carbon nanotube dispersion solution containing bundled carbon nanotubes and hydrogenated nitrile rubber has been studied, and when the dispersion particle size of carbon nanotubes in the dispersion solution or the viscosity of the dispersion solution is set to be within a preferable range, properties of the secondary battery are improved.

In addition, in Patent Literature 3, a conductive material dispersion containing a conductive material containing bundled carbon nanotubes and hydrogenated nitrile rubber and having a phase angle of 3° to 18° at a frequency of 1 Hz, which is measured with a rheometer, has been studied. Since the conductive material dispersion having a phase angle of 3° to 18° has properties closer to solid-like properties than a low-viscosity conductive material dispersion, it is possible to improve coatability and coating stability during electrode production therewith.

Patent Literature 4 reports an invention in which a conductive material dispersion containing a conductive material containing bundled carbon nanotubes and hydrogenated nitrile rubber and having a complex elastic modulus (G*|@ 1 Hz) of 20 Pa to 500 Pa at a frequency of 1 Hz, which is measured with a rheometer, has been studied, and the dispersion of the conductive material dispersion is improved by controlling the complex elastic modulus.

In addition, if the conductive material becomes finer, ideally, a more efficient conductive network can be formed. However, the specific surface area becomes larger as the conductive material becomes finer, and it is difficult to obtain a favorable conductive material dispersion having a high cohesive force and a high concentration. If the concentration of the conductive material is forcibly raised, the viscosity of the dispersion solution increases and the fluidity deteriorates. For a conductive material dispersion with poor fluidity, when the conductive material dispersion is transported into a tank or the like or stored for a long time and then used, there is a problem that it is difficult to extract it from the tank or the like.

On the other hand, in a dispersion solution with a low conductive material concentration, there are a problem of a low degree of freedom in design when materials such as an active material and a binder are added and a problem of high transportation costs per conductive material solid component.

Therefore, there is an urgent need to obtain a conductive material dispersion in which a fine conductive material with a high concentration and high fluidity is favorably dispersed.

### Citation List

#### Patent Literature

Patent Literature 1: PCT International Publication No. WO2017-010093
Patent Literature 2: Japanese Patent Laid-Open No. 2018-522803
Patent Literature 3: Published Japanese Translation No. 2018-534731 of the PCT International Publication
Patent Literature 4: Published Japanese Translation No. 2018-533175 of the PCT International Publication

## SUMMARY OF INVENTION

### Problem to Be Solved by Invention

In the conductive material dispersion described in Patent Literature 1 to 3, when a polymer such as hydrogenated nitrile rubber having excellent dispersion and binding is used, it is possible to provide an excellent secondary battery. However, for the demands for a high output, a large volume, a long lifespan, and low cost, which are increasing year by year, further improvement is required.

The inventors have studied in order to satisfy the demand, and found that, in the method according to the conventional invention, fine control of the dispersion state of the conductive material is insufficient. In addition, the conductive material dispersion described in Patent Literature 3 has relatively strong solid-like properties. The conductive material dispersion described in Patent Literature 4 has a relatively strong elastic behavior. Therefore, there are problems that all conductive material dispersions have poor fluidity and are unsuitable for transportation and long-term storage in a tank.

The inventors conducted a detailed comparative study regarding small differences in the dispersion state of the conductive material, and found that, when a fibrous carbon nanotube or acetylene black having a bulky structure (that is, a carbon material with a high aspect ratio) is used as a conductive material, it is difficult to control the dispersion state using a conventional dispersion degree indicator. Specifically, conventionally, a particle size distribution or viscosity has been used as a dispersion degree indicator, but it was found that, even if measurement values are the same, properties may be different during use in a secondary battery, and the dispersion state of the conductive material is not accurately determined.

For example, in the case of a particle size distribution, since calculation is performed assuming that non-spherical particles with a high aspect ratio are spherical, deviation from reality is likely to occur. In addition, when particles larger or smaller than a detectable range are contained, the measured value cannot be used to distinguish the state in which these particles are not contained.

In the case of the viscosity, generally, it is said that the viscosity decreases as the dispersion state of the conductive material becomes more favorable. However, when the conductive material has a high aspect ratio (particularly, when fibers are long and likely to be entangled), even if the conductive material is uniformly and stably loosened in a dispersion medium, since the conductive material itself has structural viscosity, the elasticity becomes stronger. In addition, when the fiber or structure is broken, the viscosity changes due to two factors of deaggregation and breakage, and thus it is difficult to accurately express the state of the conductive material with the viscosity alone. When the carbon material fibers or structures are broken, since it is difficult to form a well-developed conductive network in the electrode due to an increase in contact resistance within the carbon material, it is effective to disperse the fibers or structures uniformly while breaking them as little as possible.

That is, an objective to be achieved by the present invention is to provide a conductive material dispersion in which a dispersion state of a conductive material is finely controlled, which contains the conductive material at a high concentration, and which has high fluidity, and a secondary battery electrode composition. More specifically, a non-aqueous electrolyte secondary battery with a high output, a large volume, and a long lifespan is provided.

### Means for Solving Problem

The inventors conducted extensive studies, and found that the above objective can be achieved by dispersing a polymer having a specific structure and Mooney viscosity ($ML_{1+4}$,100°C), a dispersion medium, and a conductive material so that a product (X×Y) of a complex elastic modulus X (Pa) and a phase angle Y(°) obtained by dynamic viscoelasticity measurement is 30 or more and 1,700 or less. It was found that, when the value of (X×Y) is set to be within a specific range as described above, with regard to a conductive material, while appropriately maintaining long carbon nanotube fibers without breaking them and while appropriately maintaining the bulky structure of acetylene black without destroying it, the conductive material can be dispersed at a high concentration to form a well-developed conductive network in the electrode. Accordingly, even if the amount of the conductive material in the electrode is small, it is possible to provide a secondary battery with a high output, a large volume, and a long lifespan.

That is, the present invention includes the following embodiments. The embodiments of the present invention are not limited to the following.

One embodiment of the present invention relates to a conductive material dispersion containing a conductive material, a polymer including an aliphatic hydrocarbon structural unit and a nitrile group-containing structural unit, and a dispersion medium,

wherein the conductive material contains at least one selected from the group consisting of carbon nanotubes and acetylene black,

wherein the polymer has a Mooney viscosity ($ML_{1+4}$,100°C) of 20 or more and 80 or less,
wherein the aliphatic hydrocarbon structural unit includes an alkylene structural unit, and the content of the aliphatic hydrocarbon structural unit based on the mass of the polymer is 40 mass% or more and less than 85 mass%, and the content of the nitrile group-containing structural unit based on the mass of the polymer is 15 mass% or more and 50 mass% or less, and
wherein a product (X×Y) of a complex elastic modulus X (Pa) and a phase angle Y(°) of the conductive material dispersion obtained by dynamic viscoelasticity measurement is 30 or more and 1,700 or less.

In the above embodiment, the complex elastic modulus obtained by the dynamic viscoelasticity measurement is preferably 0.1 Pa or more and 500 Pa or less.

In the above embodiment, the phase angle obtained by the dynamic viscoelasticity measurement is preferably 1° or more and 80° or less.

In the above embodiment, a TI value measured with a type B viscometer is preferably 1.5 to 5.0.

In the above embodiment, a median diameter is preferably 0.4 μm or more and less than 5.0 μm.

In the above embodiment, the gloss of a film obtained by applying a conductive material dispersion onto a substrate and performing drying, which is measured at 60°, is preferably 5 to 120.

Another embodiment of the present invention relates to a secondary battery electrode composition containing the conductive material dispersion according to the above embodiment.

Still another embodiment of the present invention relates to an electrode film obtained by applying the secondary battery electrode composition according to the above embodiment.

Yet another embodiment of the present invention relates to a secondary battery including the electrode film according to the above embodiment.

Priority is claimed on Japanese Patent Application No. 2021-70315, filed April 19, 2021, the content of which is incorporated herein by reference.

Effects of Invention

According to the embodiment of the present invention, it is possible to provide a conductive material dispersion containing a conductive material at a high concentration and having high fluidity, and a secondary battery electrode composition. In addition, according to the embodiment of the present invention, it is possible to provide an electrode film that can improve an output and a cycle lifespan of a secondary battery, and a secondary battery having a high output and a favorable cycle lifespan.

DESCRIPTION OF EMBODIMENTS

Hereinafter, as embodiments of the present invention, a conductive material, a polymer, a conductive material dispersion, a secondary battery electrode composition, an electrode film, a secondary battery and the like will be described in detail. However, the present invention is not limited to the following embodiments, and the present invention also includes embodiments that are performed without changing the gist of the present invention.

In this specification, a carbon nanotube may be abbreviated as "CNT" and acetylene black may be abbreviated as "AB." Hydrogenated nitrile rubber may be abbreviated as "H-NBR" or "dispersant", and N-methyl-2-pyrrolidone may be abbreviated as "NMP." Here, in this specification, the conductive material dispersion may be simply referred to as a "dispersion solution."

<Conductive material>

In one embodiment of the present invention, the conductive material contains at least carbon nanotubes (CNT) and/or acetylene black (AB). In addition, as the conductive material, additionally, carbon materials such as carbon black other than acetylene black (AB), graphene, multilayer graphene, and graphite, and other conductive materials may be used alone or two or more thereof may be used in combination. When a conductive material other than CNT and/or AB is used, among these, carbon black such as furnace black, hollow carbon black, and ketjen black is preferable in consideration of adsorption performance of the dispersant. Carbon black such as furnace black, hollow carbon black, and ketjen black may be neutral, acidic, or basic, and oxidized carbon black and graphitized carbon black may be used.

CNTs have a shape in which flat graphite is wound into a cylindrical shape, and include single-walled CNTs and multi-walled CNTs, and these may be mixed. Single-walled CNTs have a structure in which one graphite layer is wound. Multi-walled CNTs have a structure in which two, three or more graphite layers are wound. In addition, side walls of CNTs may not have a graphite structure. The CNTs may be, for example, CNTs having side walls having an amorphous structure.

The shape of CNTs is not limited. Examples of shapes of CNTs include various shapes including a needle shape, a cylindrical tubular shape, a fishbone shape (a fishbone or cup-laminated type), a trump shape (platelet), and a coil shape. Among these, in the present embodiment, the shape of CNTs is preferably a needle shape or a cylindrical tubular shape. CNTs may be of a single shape or of a combination of two or more shapes.

Examples of forms of CNTs include graphite whiskers, filamentous carbon, graphite fibers, ultrafine carbon tubes, carbon tubes, carbon fibrils, carbon microtubes, and carbon nanofibers. Carbon nanotubes may have one of these forms or a form in which two or more thereof are combined.

The outer diameter of CNTs is preferably 1 nm or more and more preferably 5 nm or more. In addition, the outer diameter of CNTs is preferably 30 nm or less, more preferably 20 nm or less, and still more preferably 13 nm or less. Here, the average outer diameter of CNTs can be calculated by observing and imaging CNTs using a transmission electron microscope and then selecting 300 arbitrary CNTs in the obtained observation image, and measuring the outer diameters thereof.

When two or more types of CNTs with different average outer diameters are used CNTs, the average outer diameter of first CNTs is preferably 1 nm or more and less than 5 nm. The average outer diameter of second CNTs is preferably 5 nm or more and 30 nm or less and more preferably 20 nm or less. When two or more types of CNTs with different average outer diameters are used CNTs, the mass ratio between first CNTs and second CNTs is preferably 1:10 to 1:100 and more preferably 1:10 to 1:50.

The average fiber length of CNTs is preferably 0.5 μm or more, more preferably 0.8 μm or more, and still more preferably 1.0 μm or more. In addition, the fiber length of CNTs is preferably 20 μm or less and more preferably 10 μm or less. Here, the average fiber length of CNTs can be calculated by observing and imaging CNTs using a scanning electron microscope and then selecting 300 arbitrary CNTs in the obtained observation image, and measuring the fiber lengths thereof. The average fiber length of CNTs in the conductive material dispersion is preferably within the above range.

The aspect ratio is a value obtained by dividing the fiber length of CNTs by the outer shape. A typical aspect ratio can be determined using the average fiber length and the average outer shape value. A conductive material with a larger aspect ratio allows high conductivity to be obtained when an electrode is formed. The aspect ratio of CNTs is preferably 30 or more, more preferably 50 or more, and still more preferably 80 or more. In addition, the aspect ratio of CNTs is preferably 10,000 or less, more preferably 3,000 or less, and still more preferably 1,000 or less.

The specific surface area of CNTs is preferably 100 $m^2/g$ or more, more preferably 150 $m^2/g$ or more, and still more preferably 200 $m^2/g$ or more. In addition, the specific surface area of CNTs is preferably 1,200 $m^2/g$ or less, and more preferably 1,000 $m^2/g$ or less. The specific surface area of CNTs is calculated by a BET method according to nitrogen adsorption measurement.

The carbon purity of CNTs is represented by the content (mass%) of carbon atoms in the CNTs. The carbon purity with respect to 100 mass% of CNTs is preferably 80 mass%, more preferably 90 mass% or more, still more preferably 95 mass% or more, and particularly preferably 98 mass% or more. When the carbon purity is set to be within the above range, it is possible to prevent problems such as short circuiting caused by formation of dendrites due to impurities.

The content of CNTs in the non-volatile content of the carbon nanotube dispersion solution is preferably 0.1 mass% or more, more preferably 0.3 mass% or more, and still more preferably 1 mass% or more. In addition, the content of CNTs is preferably 20 mass% or less and more preferably 10 mass% or less. When the content of CNTs is set to be within the above range, the CNTs can be favorably and stably present without causing precipitation or gelation. In addition, it is preferable to appropriately adjust the content of CNTs depending on the specific surface area of CNTs, the affinity to the dispersion medium, a dispersion ability of the dispersant and the like so that a carbon nanotube dispersion solution having appropriate fluidity or viscosity is obtained.

Acetylene black (AB) is one type of carbon black produced using acetylene gas as a carbon source, and has very few impurities derived from raw materials, and thus it has excellent purity and is suitably used in secondary batteries. Acetylene black has a secondary structure (aggregate) in which primary particles are linked in a bead-like manner and a tertiary structure (agglomerate) in which secondary structures are additionally aggregated, and the secondary structure and the tertiary structure are collectively referred to as a structure.

When primary particles are observed under an electronic microscope or the like, they appear spherical, but the primary particles are not chemically structurally independent objects, but are linked to adjacent primary particles in the aggregate by chemical bonds to form a secondary structure. On the other hand, the secondary structures are chemically structurally independent objects, and aggregated due to an intermolecular force to form a tertiary structure.

Therefore, it can be said that making the conductivity inside the secondary structure higher than the conductivity between secondary structures including contact resistance, and deaggregating the tertiary structures while maintaining the structure of the secondary structure as much as possible are effective in obtaining an electrode having excellent conductivity. In this specification, the secondary structure may be simply referred to as a "structure." Examples of acetylene black include Denka Black (commercially available from Denka Co., Ltd.), and various grades are commercially

available on the market.

The average primary particle size of AB is preferably 10 nm or more, more preferably 20 nm or more, and still more preferably 25 nm or more. In addition, the average primary particle size of AB is preferably 100 nm or less, more preferably 80 nm or less, and still more preferably 60 nm or less. Here, the average primary particle size of AB can be calculated by observing and imaging AB using a transmission electron microscope and then selecting 100 arbitrary spherical AB primary particles in the obtained observation image, and measuring the outer diameters thereof.

The aspect ratio of AB can be calculated as follows. First, AB is observed and imaged using a scanning electron microscope. Next, in the obtained observation image, for 100 arbitrary AB pieces, the lengths in the long axis direction and the short axis direction are measured when the secondary structure is assumed to be elliptical. The aspect ratio is a value obtained by dividing the length in the long axis direction by the length in the short axis direction measured accordingly.

When aggregation of tertiary structures of AB is strong and it is difficult to observe the secondary structure, a sample that has been deaggregated using the polymer of the present embodiment or an arbitrary dispersant and then dried may be observed. The aspect ratio of AB is preferably 3 or more, more preferably 5 or more, and still more preferably 10 or more. In addition, the aspect ratio of AB is preferably 100 or less and more preferably 50 or less. Here, in this specification, the length in the long axis direction when the secondary structure of AB is assumed to be elliptical may be referred to as a "structure length." In addition, for 100 arbitrary AB pieces, the average value of the structure lengths measured may be referred to as an "average structure length."

When the conductive material is dispersed in a dispersing machine due to collision with media such as a bead mill and when a treatment such as repeatedly passing through a dispersing machine is performed over a long time, the conductive material may be damaged to produce a short-sided carbonaceous material. When a short-sided carbonaceous material is generated, the viscosity of the conductive material dispersion decreases, and the gloss of the coating obtained by applying and drying the conductive material dispersion increases, and thus it seems that the dispersion state is favorable based on determination only from these evaluation results. However, the short-sided carbonaceous material has high contact resistance and hardly forms a conductive network, and thus the resistance of the electrode may deteriorate. The extent to which the short-sided carbonaceous material is generated can be determined by a method in which a sample obtained by diluting a dispersion solution and adding it to a substrate having a smooth surface and favorable affinity with a dispersion medium and drying it is observed under a scanning electron microscope. When dispersion condition or the composition of the dispersion solution is adjusted so that a 0.1 μm or less carbonaceous material is not generated, it is possible to easily obtain an electrode having high conductivity.

When a conductive material in which the acidic group amount is within the following preferable range is used, the affinity balance between the conductive material, the polymer of the present embodiment, and the dispersion medium is improved, and a better conductive material dispersion can be obtained. The acidic group amount of the conductive material can be obtained by back titration from the amount of hexylamine adsorbed.

For the conductive material, the acidic group amount obtained from the amount of hexylamine adsorbed based on the surface area calculated by a BET method of the conductive material is preferably 0.1 $\mu mol/m^2$ or more and more preferably 0.2 $\mu mol/m^2$ or more. In addition, the acidic group amount of the conductive material is preferably 0.8 $\mu mol/m^2$ or less and more preferably 0.7 $\mu mol/m^2$ or less. For the conductive material, the acidic group amount obtained from the amount of hexylamine adsorbed based on the mass of the conductive material is preferably 40 μmol/g or more, more preferably 50 μmol/g or more, and still more preferably 120 μmol/g or more. In addition, the acidic group amount of the conductive material is preferably 250 μmol/g or less and more preferably 220 μmol/g or less.

<Polymer>

In one embodiment of the present invention, the polymer is a polymer including at least an aliphatic hydrocarbon structural unit and a nitrile group-containing structural unit. The aliphatic hydrocarbon structural unit in the polymer includes an alkylene structural unit.

The aliphatic hydrocarbon structural unit is a structural unit including an aliphatic hydrocarbon structure, and preferably a structural unit composed of only an aliphatic hydrocarbon structure. The aliphatic hydrocarbon structure includes at least a saturated aliphatic hydrocarbon structure, and may further include an unsaturated aliphatic hydrocarbon structure. The aliphatic hydrocarbon structure preferably includes at least a linear aliphatic hydrocarbon structure, and may further include a branched aliphatic hydrocarbon structure.

Examples of aliphatic hydrocarbon structural units include alkylene structural units, alkenylene structural units, alkyl structural units, alkanetriyl structural units, and alkanetetrayl structural units. The aliphatic hydrocarbon structural unit preferably includes at least an alkylene structural unit.

The alkylene structural unit is a structural unit including an alkylene structure and preferably a structural unit composed of only an alkylene structure. The alkylene structure is preferably a linear alkylene structure or a branched alkylene structure.

The alkylene structural unit preferably includes a structural unit represented by the following General Formula (1A).

General Formula (1A)

[Chem. 1]

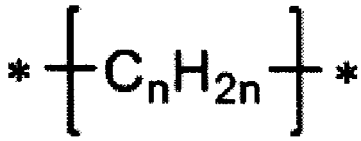

In General Formula (1A), n represents an integer of 1 or more. n is preferably an integer of 2 or more, more preferably an integer of 3 or more, and particularly preferably an integer of 4 or more. n is preferably an integer of 6 or less, and more preferably an integer of 5 or less. n is particularly preferably 4.

In this specification, "*" represents a bond with another structure.

The alkylene structural unit preferably includes a structural unit represented by the following General Formula (1B).

General Formula (1B)

[Chem. 2]

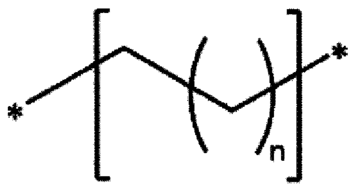

In General Formula (1B), n represents an integer of 1 or more. n is preferably an integer of 2 or more and more preferably an integer of 3 or more. n is preferably an integer of 5 or less and more preferably an integer of 4 or less. n is particularly preferably 3.

The alkylene structural unit preferably includes a structural unit represented by the following General Formula (1C).

General Formula (1C)

[Chem. 3]

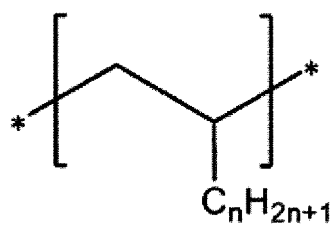

In General Formula (1C), n represents an integer of 1 or more. n is preferably an integer of 4 or less, more preferably an integer of 3 or less, and still more preferably an integer of 2 or less. n is particularly preferably 2.

A method of introducing an alkylene structural unit into the polymer is not particularly limited, and for example, the following method (1a) or (1b) may be exemplified.

In the method (1a), a polymer is produced using a monomer composition containing conjugated diene monomers

according to a polymerization reaction. The produced polymer includes a monomer unit derived from a conjugated diene monomer. In this specification, the "monomer unit derived from a conjugated diene monomer" may be referred to as a "conjugated diene monomer unit" and monomer units derived from other monomers may be similarly abbreviated. Next, when hydrogen is added to the conjugated diene monomer unit, at least some of conjugated diene monomer units are converted into alkylene structural units. In this specification, "hydrogen-added" may be referred to as "hydrogenation." The finally obtained polymer includes, as alkylene structural units, units obtained by hydrogenating conjugated diene monomer units.

Here, the conjugated diene monomer unit includes at least a monomer unit having one carbon-carbon double bond. For example, the 1,3-butadiene monomer unit, which is a conjugated diene monomer unit, includes at least one monomer unit selected from the group consisting of monomer unit having a cis-1,4 structure, a monomer unit having a trans-1,4 structure, and a monomer unit having a 1,2 structure, and may include two or more monomer units. In addition, the conjugated diene monomer unit is a monomer unit having no carbon-carbon double bond, and a monomer unit containing a branch point. In this specification, the "branch point" refers to a branch point in a branched polymer, and when the conjugated diene monomer unit includes a monomer unit containing a branch point, the polymer produced above is a branched polymer.

In the method (1b), a polymer is produced using a monomer composition containing an $\alpha$-olefin monomer according to a polymerization reaction. The produced polymer includes an $\alpha$-olefin monomer unit. The finally obtained polymer includes an alkylene structural unit as an $\alpha$-olefin monomer unit.

Among these, the method (1a) is preferable because it makes it easy to produce a polymer. The number of carbon atoms of a conjugated diene monomer is 4 or more and preferably 4 or more and 6 or less. Examples of conjugated diene monomers include conjugated diene compounds such as 1,3-butadiene, isoprene, 2,3-dimethyl-1,3-butadiene, and 1,3-pentadiene. Among these, 1,3-butadiene is preferable. The alkylene structural unit preferably includes a structural unit obtained by hydrogenating a conjugated diene monomer unit (hydrogenated conjugated diene monomer unit) and more preferably includes a structural unit obtained by hydrogenating a 1,3-butadiene monomer unit (hydrogenated 1,3-butadiene monomer unit). Conjugated diene monomers may be used alone or two or more thereof may be used in combination.

Hydrogenation is preferably a method in which a conjugated diene monomer unit can be selectively hydrogenated. Examples of hydrogenation methods include known methods such as an oil layer hydrogen addition method and an aqueous layer hydrogen addition method.

Hydrogenation can be performed by a general method. Hydrogenation can be performed, for example, by treating a polymer having a conjugated diene monomer unit that is dissolved in an appropriate solvent with hydrogen gas in the presence of a hydrogenation catalyst. Examples of hydrogenation catalysts include iron, nickel, palladium, platinum, and copper.

In the method (1b), the number of carbon atoms of an $\alpha$-olefin monomer is 2 or more, preferably 3 or more, and more preferably 4 or more. The number of carbon atoms of an $\alpha$-olefin monomer is preferably 6 or less and more preferably 5 or less. Examples of $\alpha$-olefin monomers include $\alpha$-olefin compounds such as ethylene, propylene, 1-butene, and 1-hexene. $\alpha$-Olefin monomers may be used alone or two or more thereof may be used in combination.

The alkylene structural unit preferably includes at least one selected from the group consisting of a structural unit including a linear alkylene structure and a structural unit including a branched alkylene structure, more preferably includes at least one selected from the group consisting of a structural unit composed of only a linear alkylene structure and a structural unit composed of only a branched alkylene structure, and still more preferably includes at least one selected from the group consisting of a structural unit represented by Formula (1B) and a structural unit represented by Formula (1C).

The alkylene structural unit may include a structural unit including a linear alkylene structure and a structural unit including a branched alkylene structure. When the alkylene structural unit includes a structural unit including a linear alkylene structure and a structural unit including a branched alkylene structure, the content of the branched alkylene structure based on the mass of the alkylene structural unit (that is, when the mass of the alkylene structural unit is set to 100 mass%) is preferably 70 mass% or less and more preferably 65 mass% or less. Particularly, the content is preferably 20 mass% or less, more preferably 18 mass% or less, and still more preferably 15 mass% or less.

When the polymer includes a structural unit including a linear alkylene structure and a structural unit including a branched alkylene structure, the content of the branched alkylene structure based on the mass of the alkylene structural unit (that is, when the mass of the alkylene structural unit is set to 100 mass%) is, for example, 1 mass% or more, preferably 5 mass% or more, and more preferably 10 mass% or more.

In the aliphatic hydrocarbon structural unit, the content of the alkylene structural unit based on the total mass of the aliphatic hydrocarbon structural units (that is, when the mass of the aliphatic hydrocarbon structural unit is set to 100 mass%) is preferably 60 mass% or more, more preferably 70 mass% or more, still more preferably 80 mass% or more, and particularly preferably 90 mass% or more. The content of the alkylene structural unit based on the total mass of the aliphatic hydrocarbon structural unit (that is, when the mass of the aliphatic hydrocarbon structural unit is set to

100 mass%) is, for example, less than 100 mass%, and may be 99.5 mass% or less, 99 mass% or less, or 98 mass% or less. The content of the alkylene structural unit may be 100 mass%.

The content of the aliphatic hydrocarbon structural unit based on the mass of the polymer (that is, when the mass of the polymer is set to 100 mass%) is preferably 40 mass% or more, more preferably 50 mass% or more, and still more preferably 60 mass% or more. The content of the aliphatic hydrocarbon structural unit based on the mass of the polymer (that is, when the mass of the polymer is set to 100 mass%) is preferably less than 85 mass%, more preferably 75 mass% or less, and still more preferably 70 mass% or less.

The nitrile group-containing structural unit is a structural unit containing a nitrile group, and preferably includes a structural unit including an alkylene structure substituted with a nitrile group, and more preferably includes a structural unit composed of only an alkylene structure substituted with a nitrile group. The alkylene structure is preferably a linear or branched alkylene structure. The nitrile group-containing structural unit may further include a structural unit including (or composed of only) an alkyl structure substituted with a nitrile group. The number of nitrile groups contained in the nitrile group-containing structural unit is preferably 1.

The nitrile group-containing structural unit preferably includes a structural unit represented by the following General Formula (2A).

General Formula (2A)

[Chem. 4]

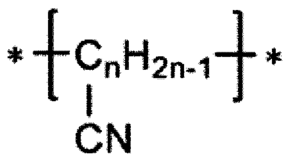

In General Formula (2A), n represents an integer of 2 or more. n is preferably an integer of 6 or less, more preferably an integer of 4 or less, and still more preferably an integer of 3 or less. n is particularly preferably 2.

The nitrile group-containing structural unit preferably includes a structural unit represented by the following General Formula (2B).

General Formula (2B)

[Chem. 5]

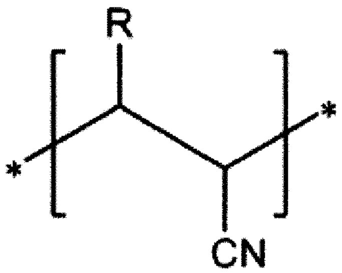

In General Formula (2B), R represents a hydrogen atom or a methyl group. R is preferably a hydrogen atom.

A method of introducing a nitrile group-containing structural unit into the polymer is not particularly limited, and a method of producing a polymer using a monomer composition containing a nitrile group-containing monomer according to a polymerization reaction (method (2a)) can be preferably used. The finally obtained polymer contains a nitrile group-containing monomer unit as a nitrile group-containing structural unit. Examples of nitrile group-containing monomers that can form a nitrile group-containing structural unit include monomers containing a polymerizable carbon-carbon double bond and a nitrile group. Examples thereof include an $\alpha,\beta$-ethylenically unsaturated group-containing compound having a nitrile group, and specific examples thereof include acrylonitrile and methacrylonitrile. Particularly, in order to increase the intermolecular force between polymers and/or between a polymer and a substance to be dispersed (substance to be adsorbed), the nitrile group-containing monomer preferably includes acrylonitrile. The nitrile group-containing monomers may be used alone or two or more thereof may be used in combination.

The content of the nitrile group-containing structural unit based on the mass of the polymer (that is, when the

mass of the polymer is set to 100 mass%) is preferably 15 mass% or more, more preferably 20 mass% or more, and still more preferably 30 mass% or more. The content of the nitrile group-containing structural unit based on the mass of the polymer (that is, when the mass of the polymer is set to 100 mass%) is preferably 50 mass% or less, more preferably 46 mass% or less, and still more preferably 40 mass% or less. When the content of the nitrile group-containing structural unit is set to be within the above range, it is possible to control adsorption to a substance to be dispersed and the affinity to the dispersion medium, and the substance to be dispersed can be stably present in the dispersion medium. In addition, it is also possible to control the affinity to the electrolytic solution of the polymer, and it is possible to prevent problems such as an increase in the resistance of the electrolytic solution due to dissolution of the polymer in the electrolytic solution in the battery.

The polymer may include arbitrary structural units. Examples of arbitrary structural units include amide group-containing structural units; carboxyl group-containing structural units; alkenylene structural units; alkyl structural units; and structural units containing a branch point such as alkanetriyl structural units and alkanetetrayl structural units. The structural units containing a branch point are structural units different from structural units including a branched alkylene structure and structural units including a branched alkyl structure.

The amide group-containing structural unit is a structural unit containing an amide group, and preferably includes a structural unit including an alkylene structure substituted with an amide group, and more preferably includes a structural unit composed of only an alkylene structure substituted with an amide group. The alkylene structure is preferably a linear or branched alkylene structure. The amide group-containing structural unit may further include a structural unit including (or composed of only) an alkyl structure substituted with an amide group. The number of amide groups contained in the amide group-containing structural unit is preferably 1.

The alkenylene structural unit is a structural unit including an alkenylene structure, and is preferably a structural unit composed of only an alkenylene structure. The alkenylene structure is preferably a linear alkenylene structure or a branched alkenylene structure.

The alkenylene structural unit preferably includes at least one selected from the group consisting of structural units including a linear alkenylene structure and structural units including a branched alkenylene structure. It more preferably includes at least one selected from the group consisting of structural units composed of only a linear alkenylene structure and structural units composed of only a branched alkenylene structure.

For example, when a polymer is obtained through the method (1a), in the polymer, conjugated diene monomer units having a carbon-carbon double bond within the units may remain in the molecule without adding hydrogen. The finally obtained polymer may include, as alkenylene structural units, conjugated diene monomer units having a carbon-carbon double bond within the units.

The alkyl structural unit is a structural unit including an alkyl structure (provided that it is a structural unit that does not correspond to other aliphatic hydrocarbon structural units such as a branched alkylene structural unit, and a nitrile group-containing structural unit, an amide group-containing structural unit, and a carboxyl group-containing structural unit), and is preferably a structural unit composed of only an alkyl structure. The alkyl structure is preferably a linear alkyl structure or a branched alkyl structure.

The alkyl structural unit preferably includes at least one selected from the group consisting of structural units including a linear alkyl structure and structural units including a branched alkyl structure, and more preferably includes at least one selected from the group consisting of structural units composed of only a linear alkyl structure and structural units composed of only a branched alkyl structure.

For example, when a polymer is obtained through the method (1a) or (1b), in the polymer, preferably, at least a hydrogenated conjugated diene monomer unit or $\alpha$-olefin monomer unit is preferably introduced as a terminal group of the polymer. The finally obtained polymer may include these monomer units as alkyl structural units.

The alkanetriyl structural unit is a structural unit including an alkanetriyl structure and is preferably a structural unit composed of only an alkanetriyl structure. The alkanetetrayl structural unit is a structural unit including an alkanetetrayl structure and is preferably a structural unit composed of only an alkanetetrayl structure.

For example, when a polymer is obtained through the method (1a), in the polymer, the conjugated diene monomer unit is a monomer unit having no carbon-carbon double bond within the units, and is introduced into the molecule as a monomer unit containing a branch point. In this case, the finally obtained polymer is a branched polymer, and may include a conjugated diene monomer unit as an aliphatic hydrocarbon structural unit containing a branch point such as an alkanetriyl structural unit or an alkanetetrayl structural unit. When the aliphatic hydrocarbon structural unit includes a structural unit containing a branch point, the polymer is a branched polymer. The branched polymer may be mesh polymer. Since a polymer including a structural unit containing a branch point can be three-dimensionally adsorbed on a substance to be dispersed, it is possible to further improve dispersion and stability.

As a preferable aspect of the polymer, a polymer in which a total content of the aliphatic hydrocarbon structural unit and the nitrile group-containing structural unit included in the polymer based on the mass of the polymer is 80 mass% or more and 100 mass% or less may be exemplified. The total content is preferably 90 mass% or more, more preferably 95 mass% or more, and still more preferably 98 mass% or more.

In this specification, the content of structural units can be determined using the amount of monomers used, nuclear magnetic resonance (NMR) and/or infrared spectroscopy (IR) measurement.

The polymer in the embodiment of the present invention has a Mooney viscosity ($ML_{1+4,}$100°C) of 20 or more and 80 or less. The Mooney viscosity of the polymer in the present invention is 20 or more, preferably 30 or more, and more preferably 40 or more, and is 80 or less, preferably 70 or less, and more preferably 65 or less.

The "Mooney viscosity ($ML_{1+4,}$100°C)" of the polymer can be measured at a temperature of 100°C according to JIS K 6300-1. It is thought that, when the Mooney viscosity is set to be within the above range, an appropriate repulsive force can be imparted in an adsorption state in the conductive material, and it is possible to improve the dispersion stability. If the Mooney viscosity is below the above range, there is concern that the solubility in the solvent increases and the balance between the conductive material and the dispersion medium deteriorates. In addition, if the Mooney viscosity is above the above range, the viscosity of the conductive material dispersion becomes too high, and the energy transfer efficiency of a dispersing machine may decrease, or metal contaminants derived from raw materials may not be able to be efficiently removed by a method such as iron removal with a magnet, filtration, or centrifugation, and the battery performance may deteriorate due to the residual metal contaminants.

A method of adjusting the Mooney viscosity of the polymer is not particularly limited. For example, when the polymer composition (a type of a structural unit, a content, a hydrogenation rate, etc.), the structure (a straight chain rate, etc.), the molecular weight, production conditions (a polymerization temperature, the amount of a molecular weight adjusting agent, etc.) and the like are changed, it is possible to adjust the Mooney viscosity. Specifically, the Mooney viscosity of the polymer can be adjusted by the following method.

In the method (2a), the Mooney viscosity is lowered by increasing the amount of the molecular weight adjusting agent used during polymer production.

In the method (2b), the Mooney viscosity of the polymer is lowered by modifying the nitrile group contained in the nitrile group-containing structural unit of the polymer through hydrolyzing by adding a base.

In the method (2c), the Mooney viscosity is lowered by applying a mechanical shear force to the polymer.

In the method (2b), when a polymer including a nitrile group-containing monomer unit and an aliphatic hydrocarbon structural unit is produced, a base may be added for adjustment. In addition, a polymer including a nitrile group-containing monomer unit and an aliphatic hydrocarbon structural unit, which has already been produced, is dissolved in a solvent in which the polymer can be dissolved, and a base may be then added for adjustment. As the base to be added, at least one selected from the group consisting of inorganic bases and organic hydroxides (organic bases) can be used. When a base is added for adjustment, the Mooney viscosity can be lowered within a shorter time by applying heat to the extent that the solvent does not ignite or boil.

Examples of inorganic bases include alkali metal or alkaline earth metal chlorides, hydroxides, carbonates, nitrates, sulfates, phosphates, tungstates, vanadates, molybdates, niobates, borates, and alkoxides; and ammonium hydroxide. Among these, alkali metal or alkaline earth metal hydroxides or alkoxides are preferable because they can easily supply cations.

Examples of alkali metal hydroxides include lithium hydroxide, sodium hydroxide, and potassium hydroxide. Examples of alkali metal alkoxides include lithium methoxide, lithium ethoxide, lithium propoxide, lithium t-butoxide, lithium n-butoxide, sodium methoxide, sodium ethoxide, sodium propoxide, sodium-t-butoxide, sodium-n-butoxide, potassium methoxide, potassium ethoxide, potassium propoxide, potassium t-butoxide, and potassium n-butoxide.

Examples of alkaline earth metal hydroxides include calcium hydroxide and magnesium hydroxide. Among these, at least one selected from the group consisting of lithium hydroxide, sodium hydroxide, potassium hydroxide, and sodium-t-butoxide is more preferably used. Here, the metal contained in the inorganic base may be a transition metal.

Organic hydroxides are slats containing organic cations and hydroxide ions. Examples of organic hydroxides include trimethyl-2-hydroxyethyl ammonium hydroxide, tetramethyl ammonium hydroxide, cetyltrimethyl ammonium hydroxide, hexadecyltrimethyl ammonium hydroxide, trimethylphenyl ammonium hydroxide, 3-trifluoromethyl-phenyltrimethyl ammonium hydroxide, and benzyltrimethyl ammonium hydroxide. Among these, at least one selected from the group consisting of trimethyl-2-hydroxyethyl ammonium hydroxide, and tetramethyl ammonium hydroxide is particularly preferably used.

The amount of the base used based on the mass of the polymer is preferably 0.1 mass% or more, more preferably 0.5 mass% or more, and still more preferably 1 mass% or more. The amount of the base used based on the mass of the polymer is preferably 20 mass% or less, more preferably 15 mass% or less, and still more preferably 10 mass% or less. If the amount used is too small, the Mooney viscosity is less likely to decrease. If the amount used is too large, corrosion may be caused within the dispersing device and/or the battery.

In the method (2b), the Mooney viscosity can be lowered by mixing a polymer including an aliphatic hydrocarbon structural unit and a nitrile group-containing monomer unit, a base, and a solvent. An optional component may be additionally mixed. The order of adding a polymer, a base and a solvent to a container and the method of mixing them are not limited, and these may be added to a container at the same time; a polymer, a base and a solvent may be added separately to a container; or either or both of a polymer and a base are mixed with a solvent to produce a polymer-containing solution and/or a base-containing solution, and the polymer-containing solution and/or the base-containing solution may be added to the container. Particularly, since the nitrile group can be modified efficiently, a method of adding a base dispersion solution in which a base is dispersed in a solvent to a polymer solution in which a polymer is dissolved in a solvent while stirring is preferable. For stirring, a disper (dispersing machine), a homogenizer or the like can be used. As the solvent, a solvent to be described below can be used.

The temperature during mixing is not limited, and modification can be accelerated by heating to 30°C or higher. In addition, in order to promote polymer modification, a very small amount of water and/or an alcohol may be added to the container. Water and/or an alcohol may be added to the container while the polymer and the base are mixed, may be added to the container before the polymer and the base are added to the container, or may be added to the container simultaneously or sequentially with the polymer and the base. In addition, when the polymer, the base, and the optional component used as necessary are highly hygroscopic, water may be included as moisture-absorbed water. The amount of water and/or an alcohol based on the mass of the polymer is preferably 0.05 to 20 mass%, more preferably 0.05 to 5 mass%, and still more preferably 0.05 to 1 mass%.

Examples of alcohols include methanol, ethanol, propanol, isopropanol, butanol, isobutanol, secondary butanol, tertiary butanol, benzyl alcohol, ethylene glycol, diethylene glycol, triethylene glycol, polyethylene glycol, propylene glycol, dipropylene glycol, polypropylene glycol, butylene glycol, hexanediol, pentanediol, glycerin, hexanetriol, and thiodiglycol. The alcohols may be used alone or two or more thereof may be used in combination. Hydrolysis is preferably performed in the presence of at least one selected from the group consisting of methanol, ethanol, butanol, hexanol, and water, and particularly preferably performed in the presence of water.

In the method (2c), when a polymer including a nitrile group-containing monomer unit and an aliphatic hydrocarbon structural unit is produced, a mechanical shear force may be applied for adjustment. In addition, a polymer including a nitrile group-containing monomer unit and an aliphatic hydrocarbon structural unit, which has already been produced, is dissolved in a solvent in which the polymer can be dissolved, and a mechanical shear force may be then applied for adjustment. The Mooney viscosity can be lowered by applying a mechanical shear force to the polymer before dissolution using a roller or a kneader, and since it is efficient to use the polymer as a dispersant that is dissolved in a solvent in which the polymer can be dissolved, it is more preferable to apply a shear force in a polymer solution state.

Examples of methods of applying a shear force in a polymer solution state include methods using a dispersion unit such as a homogenizer and a Silverson mixer. A disper or the like can be used to apply a shear force, but it is preferable to use a dispersion unit that can apply a higher shear force such as a homogenizer and a Silverson mixer. Examples of methods of applying a mechanical shear force to the polymer before dissolution include methods using a dispersion unit such as a kneader and a 2-roll mill.

<Dispersion medium>

In one embodiment of the present invention, the dispersion medium is not particularly limited as long as it is miscible with a polymer of the above embodiment. In this specification, "miscible with a polymer" means that the insoluble content becomes 10 mass% or less when 0.5 g of the polymer is dissolved in 100 g of the dispersion medium at 25°C. The insoluble content can be calculated by filtering the undissolved polymer and the solution, collecting the undissolved polymer, and then drying the collected polymer with hot air, and measuring the mass.

The dispersion medium is preferably a medium in which the polymer can be dissolved and more preferably a high dielectric constant solvent in which the polymer can be dissolved. In this specification, the "polymer can be dissolved" means that, when 0.5 g of the polymer is dissolved in 100 g of the dispersion medium at 25°C, the insoluble content cannot be visually confirmed, and the solution becomes transparent without turbidity. When a dispersion medium in which the polymer can be dissolved is used, it is possible to easily obtain a favorable dispersion state.

In one embodiment, the dispersion medium preferably contains a solvent composed of any one type of high dielectric constant solvents or a mixed solvent composed of two or more types thereof. In addition, one or two or more other solvents may be used in combination with the high dielectric constant solvent. In this specification, "high dielectric constant solvent" means that the numerical value of the relative dielectric constant described in a solvent handbook or the like at 20°C is preferably 2.5 or more and more preferably 25 or more. When a conductive material dispersion is produced using a high dielectric constant solvent as a dispersion medium, it is possible to improve the interaction between the nitrile group contained in the polymer according to the above embodiment, the conductive material, and the dispersion medium. In consideration of the polymer solubility, the relative dielectric constant of the high dielectric constant solvent at 20°C is preferably 60 or less and more preferably 50 or less. In one embodiment, the relative dielectric constant of the high dielectric constant solvent is preferably 30 to 50.

In one embodiment, the dispersion medium is preferably a non-aqueous dispersion medium. The polymer according to the above embodiment tends to have low solubility in water. Therefore, when water is present in the conductive material dispersion, it tends to be difficult to obtain a desired favorable dispersion state. Therefore, the dispersion medium is preferably substantially free of water. "Substantially free" means that water is not intentionally

added in excess of the amount that is contained due to moisture absorption or the like. The content of water based on the total mass of the dispersion medium is preferably 5 mass% or less, more preferably 1 mass% or less, and still more preferably 0.5 mass% or less. Even if a conductive material dispersion is produced without adding water, the conductive material dispersion may contain about 0.1 mass% of water due to moisture absorption or the like. In the above regard, the dispersion medium is preferably an organic solvent and more preferably a polar organic solvent that does not donate protons.

A polar organic solvent that does not donate protons can be used as a high dielectric constant solvent in which the polymer can be dissolved. Examples of polar organic solvents that do not donate protons include amide, heterocycle, sulfoxide, sulfone, lower ketone and carbonate solvents. More specific examples are as follows.

amides: N-methyl-2-pyrrolidone (NMP), N-ethyl-2-pyrrolidone (NEP), N,N-dimethylformamide, N,N-dimethylacetamide, N,N-diethylacetamide, N-methylcaprolactam and the like,
heterocycles: cyclohexylpyrrolidone, 2-oxazolidone, 1,3-dimethyl-2-imidazolidinone, γ-butyrolactone and the like,
sulfoxides: dimethylsulfoxide and the like,
sulfones: hexamethylphosphorotriamide, sulfolane and the like,
lower ketones: acetone, methyl ethyl ketone and the like,
carbonates: diethyl carbonate, dimethyl carbonate, ethyl methyl carbonate, fluoro ethylene carbonate, propylene carbonate, ethylene carbonate,
other: tetrahydrofuran, acetonitrile and the like.

In one embodiment, the dispersion medium preferably contains an amide organic solvent and more preferably contains at least one selected from the group consisting of N-methyl-2-pyrrolidone and N-ethyl-2-pyrrolidone. When the dispersion medium is a polar organic solvent that does not donate protons, since protons are unlikely to be generated in the conductive material dispersion, it is possible to easily improve the storage stability of the conductive material dispersion.

<Conductive material dispersion>

A conductive material dispersion according to one embodiment of the present invention contains at least a conductive material that is CNT and/or AB, a polymer, and a dispersion medium. The conductive material, the polymer, and the dispersion medium are as described above.

In one embodiment, the conductive material dispersion may appropriately contain, as necessary, a dispersant other than the polymer of the above embodiment, other additives such as a wetting agent, a surfactant, a pH adjusting agent, a wetting penetrating agent, and a leveling agent, other conductive materials, and a polymer component other than the above polymer as long as they do not impair the objective of the present invention. These can be added at any timing such as before production of the dispersion solution, during dispersion, after dispersion, and during production of an electrode-forming composition.

As the dispersant other than the polymer of the above embodiment, a known dispersant suitable for secondary batteries can be used. Among these, at least one selected from among polyvinylpyrrolidone, polyvinyl alcohol, and polyvinyl acetal is particularly preferable. A polymer obtained by introducing other substituents into a part of the above polymer or a modified polymer may be used. When the dispersant other than the polymer of the above embodiment is used, the weight average molecular weight is preferably 30,000 or less, more preferably 20,000 or less, and still more preferably 3,000 or more. Outside the above range, there is concern that adsorption between the polymer of the above embodiment and the conductive material may be inhibited.

The dispersion of the conductive material in the conductive material dispersion can be evaluated by the complex elastic modulus and the phase angle obtained by dynamic viscoelasticity measurement. The complex elastic modulus and the phase angle can be measured by the methods described in examples.

The complex elastic modulus of the conductive material dispersion indicates the hardness of the conductive material dispersion. When the conductive material is nearly spherical or the fiber length of carbon nanotubes or the structure length of carbon black is divided and shortened, the complex elastic modulus tends to decrease as the dispersion of the conductive material becomes favorable and as the viscosity of the conductive material dispersion decreases. However, when the fiber length of carbon nanotubes is long or when the structure length of carbon black is long, even if the conductive material is uniformly and stably loosened in the medium, since the conductive material itself has structural viscosity, the complex elastic modulus may be a high numerical value. In addition, the complex elastic modulus changes depending on the dispersion state of the conductive material, and also entanglement of the conductive material, the polymer, and other resin components, or the influence of their intermolecular forces.

In one embodiment, the complex elastic modulus of the conductive material dispersion obtained by dynamic viscoelasticity measurement is preferably 0.1 Pa or more, more preferably 0.3 Pa or more, and still more preferably 0.5

Pa or more. In addition, in one embodiment, the complex elastic modulus is preferably 500 Pa or less, more preferably 200 Pa or less, still more preferably 100 Pa or less, and yet more preferably 50 Pa or less. In another embodiment, the complex elastic modulus is preferably 200 Pa or less, more preferably 100 Pa or less, still more preferably 50 Pa or less, and yet more preferably 30 Pa or less. In still another embodiment, the complex elastic modulus is preferably 1 Pa to 65 Pa and more preferably 2 Pa to 30 Pa. When the complex elastic modulus is within the above range, it is easy to obtain the (X×Y) value within a predetermined range to be described below, and a uniform and well-dispersed state is obtained while maintaining the length of the conductive material.

The phase angle is the phase shift of a stress wave when the strain applied to the conductive material dispersion has a sine wave. In the case of a purely elastic component, since the sine wave has the same phase as the applied strain, the phase angle is 0°. On the other hand, in the case of a purely viscous component, the stress wave advances by 90°. In a general viscoelasticity measurement sample, the sine wave has a phase angle of larger than 0° and smaller than 90°. When the conductive material is nearly spherical or the fiber length of carbon nanotubes or the structure length of carbon black is divided and shortened, if the dispersion of the conductive material in the conductive material dispersion is favorable, the phase angle approaches 90° for a purely viscous component. However, like the complex elastic modulus, if the conductive material itself has structural viscosity, even if the conductive material is uniformly and stably loosened in the dispersion medium, the phase angle may be a low numerical value. In addition, like the complex elastic modulus, the phase angle changes depending on the dispersion state of the conductive material, and also entanglement of the conductive material, the polymer, and other resin components, or the influence of their intermolecular forces.

In one embodiment, the phase angle of the conductive material dispersion obtained by dynamic viscoelasticity measurement is preferably 1° or more, more preferably 5° or more, still more preferably 10° or more, and particularly preferably 30° or more. In addition, the phase angle is preferably 80° or less, more preferably 70° or less, and still more preferably 60° or less. If the phase angle is within the above range, it is easy to obtain the (X×Y) value within a desired range to be described below, and a uniform and well-dispersed state is obtained while maintaining the length of the conductive material. In one embodiment, the average fiber length of CNTs in the dispersion solution (after the dispersion treatment) is preferably in a range of 0.5 to 10 μm and more preferably in a range of 0.8 to 5 μm. In one embodiment, the average fiber length of CNTs may be 0.8 μm to 3 μm, and may be preferably in a range of 0.8 to 2 μm.

A well-developed conductive network is formed by uniformly and satisfactorily dispersing a conductive material having a long fiber length of carbon nanotubes or a long structure length of carbon black while maintaining a certain length or longer. Therefore, it is not enough for simply the viscosity of the conductive material dispersion to be low (apparently) and dispersion to be favorable, and as seen in the embodiment of the present invention, it is particularly effective to combine the complex elastic modulus and the phase angle with a conventional indicator such as viscosity and to determine the dispersion state. In such a regard, in the embodiment of the present invention, as will be described below, the product (X×Y) of the complex elastic modulus X (Pa) and the phase angle Y(°) is adjusted to be within a specific range. In such a feature, as described above, when the complex elastic modulus and the phase angle are set to be within the above range, since it is easy to adjust the (X×Y) value, it is possible to easily obtain a conductive material dispersion having favorable conductivity and electrode strength (adhesion).

In one embodiment, in the conductive material dispersion, the product (X×Y) of the complex elastic modulus X (Pa) and the phase angle Y(°) is preferably 30 or more and 1,700 or less. In the conductive material dispersion, when the product is within the above specific range, it is possible to easily obtain an electrode film having a high concentration, high fluidity and very good conductivity. When the complex elastic modulus X (Pa) and the phase angle Y(°) are set to be within the preferable ranges described above, it is easy to adjust the product to be within a desired range.

In one embodiment, the product (X×Y) of the complex elastic modulus X (Pa) and the phase angle Y(°) is preferably 40 or more and more preferably 50 or more. In one embodiment, the value of the product is more preferably 100 or more. In addition, the value of the product is preferably 1,500 or less, more preferably 1,300 or less, and still more preferably 1,000 or less. In one embodiment, the value of the product is preferably in a range of 100 to 1,300 and more preferably in a range of 200 to 1,200.

The dispersion of the conductive material in the conductive material dispersion can be evaluated by the median diameter (μm) determined by a laser diffraction/scattering type particle size distribution meter. In the median diameter (μm) determined by a laser diffraction/scattering type particle size distribution meter, the particle size of conductive material aggregated particles can be estimated from a scattered light intensity distribution with particles. The median diameter (μm) is preferably 0.4 or more. In addition, the median diameter (μm) is preferably 5.0 or less and more preferably 2.0 or less. If the median diameter (μm) is set to be within the above range, it is possible to obtain a conductive material dispersion in an appropriate dispersion state. If the median diameter (μm) is below the above range, the conductive material is present in an aggregated state and if the median diameter (μm) is above the above range, since a large number of finely cut conductive materials are generated, it is difficult to form an efficient conductive network. The median diameter can be measured by the methods described in examples.

The dispersion of the conductive material in the conductive material dispersion can be evaluated by the gloss (that is, the intensity of reflected light at 60° with respect to the angle of incidence) measured at 60° of a coating obtained

by application onto a smooth glass substrate, and performing baking and drying. For light incident on the coating, if the dispersion is better, the surface of the coating becomes smoother, and thus the gloss is higher. On the other hand, if the dispersion is poorer, light is scattered due to the unevenness on the surface of the coating, and the gloss decreases. The gloss at 60° can be measured by the methods described in examples.

The gloss of the coating at 60° is preferably 5 or more, more preferably 30 or more, still more preferably 50 or more, and particularly preferably 70 or more. In addition, the gloss of the coating at 60° is preferably 120 or less and more preferably 110 or less. When the gloss is set to be within the above range, it is possible to obtain a conductive material dispersion in an appropriate dispersion state. If the gloss is below the above range, the conductive material is present in an aggregated state, and if the gloss is above the above range, since a large number of finely cut conductive materials are generated, it is difficult to form an efficient conductive network.

The TI value of the conductive material dispersion can be calculated from a value obtained by dividing the viscosity (mPa·s) at 60 rpm measured with a type B viscometer by the viscosity (mPa·s) at 6 rpm. The TI value is preferably 1.5 or more and 5.0 or less. In one embodiment, the TI value is more preferably 1.5 or more and less than 3.0. If the TI value is higher, the structural viscosity caused by entanglement of the conductive material, the polymer, and other resin components or an intermolecular force thereof increases, and if the TI value is lower, the structural viscosity decreases. If the TI value is set to be within the above range, it is possible to reduce entanglement of the conductive material, the polymer, and other resin components and allow an intermolecular force to be appropriately exhibited.

<Dispersion method>

The conductive material dispersion of the present invention is, for example, preferably produced by finely dispersing CNT and/or AB, a polymer, and a dispersion medium using a dispersing device and performing a dispersion treatment. Here, the dispersion treatment may be performed in multi-step treatments including two or more steps by arbitrarily adjusting the addition timing of the material to be used.

Examples of dispersing devices include kneaders, 2-roll mills, 3-roll mills, planetary mixers, ball mills, horizontal sand mills, vertical sand mills, annular bead mills, attritors, high shear mixers, high pressure homogenizers, and ultrasonic homogenizers. Particularly, in order to promote wetting of the conductive material and loosen coarse particles, in the initial dispersion process, a high shear mixer is used, and subsequently, in order to perform dispersion while maintaining the aspect ratio of the conductive material, it is most preferable to use a high pressure homogenizer. In addition, when dispersion is performed with a high pressure homogenizer and then additionally dispersion is performed with a bead mill, it is possible to uniformize the dispersion state while maintaining the fiber length. The pressure when a high pressure homogenizer is used is preferably 60 to 150 MPa and more preferably 60 to 120 MPa.

Dispersing methods using a dispersing device include batch type dispersion, pass-type dispersion, circulation dispersion and the like, and any method may be used and two or more methods may be combined. Batch type dispersion is a method in which dispersion is performed only by the main body of the dispersing device without using pipes or the like. Since it is easy to handle, this method is preferable when a small amount is produced. Pass-type dispersion is a dispersing method in which the main body of the dispersing device includes a tank that supplies a solution to be dispersed through a pipe and a tank the receives the solution to be dispersed, and the solution is passed through the main body of the dispersing device. In addition, circulation dispersion is a method in which the solution to be dispersed that has passed through the main body of the dispersing device is returned to the tank that supplies the solution to be dispersed and dispersion is performed while circulating. In any case, since dispersion further progresses as the treatment time is longer, pass or circulation can be repeated until a desired dispersion state is achieved, and the treatment amount can be increased by changing the size of the tank and the treatment time. Pass-type dispersion is preferable to circulation dispersion because it makes it easier to uniformize the dispersion state. Circulation dispersion is preferable to pass-type dispersion because it requires a simpler operation and production facility. In the dispersion process, crushing of aggregated particles, loosening, wetting, and stabilization of the conductive material and the like proceed sequentially or simultaneously, and the finished dispersion state differs depending on the manner in which this is performed. Therefore, it is preferable to manage the dispersion state in each dispersion process using various evaluation methods. For example, it can be managed by the method described in examples.

<Secondary battery electrode composition>

A secondary battery electrode composition according to one embodiment of the present invention contains at least the conductive material dispersion, and may contain a binder resin, and an optional component may be additionally mixed thereinto.

<Binder resin>

When the secondary battery electrode composition further contains a binder resin, it is not particularly limited as long as it is generally used as a binder resin for a paint, and can be appropriately selected depending on the purpose. In addition, the binder resin used in the secondary battery electrode composition is a resin that binds substances such as an active material and a conductive material.

Examples of binder resins used in the secondary battery electrode composition include polymers or copolymers containing ethylene, propylene, vinyl chloride, vinyl acetate, vinyl alcohol, maleic acid, acrylic acid, acrylic acid ester, methacrylic acid, methacrylate, acrylonitrile, styrene, vinyl butyral, vinyl acetal, vinylpyrrolidone or the like as constituent units; polyurethane resin, polyester resin, phenolic resin, epoxy resin, phenoxy resin, urea resin, melamine resin, alkyd resin, acrylic resin, formaldehyde resin, silicone resin, and fluororesin; cellulose resins; elastomers such as styrene-butadiene rubber, and fluorine rubber; and conductive resins such as polyaniline and polyacetylene. In addition, modified products, mixtures, and copolymers of these resins may be used.

Among these, as the binder resin used in the positive electrode composition, in consideration of resistance, polymers or copolymers having fluorine atoms in the molecule are preferable. For example, polyvinylidene fluoride, polyvinyl fluoride, tetrafluoroethylene and the like are preferable. In addition, as the binder resin used in the negative electrode composition, CMC, styrene butadiene rubber, polyacrylic acid and the like are preferable because they have favorable adhesion.

The content of the binder resin used in the secondary battery electrode composition based on the non-volatile content of the secondary battery electrode composition is preferably 0.5 to 30 mass% and more preferably 0.5 to 25 mass%.

The secondary battery electrode composition may contain a positive electrode active material or a negative electrode active material. In this specification, the positive electrode active material and the negative electrode active material may be simply referred to as an "active material." The active material is a material that serves as a base for a battery reaction. The active materials are classified into a positive electrode active material and a negative electrode active material according to the electromotive force. In this specification, a secondary battery electrode composition containing a positive electrode active material or a negative electrode active material may be referred to as a "positive electrode mixture composition." a "negative electrode mixture composition," or simply referred to as a "mixture composition." The mixture composition is preferably in a slurry form in order to improve uniformity and processability. The mixture composition contains at least the conductive material dispersion of the above embodiment and an active material, or contains at least the conductive material dispersion of the above embodiment, a binder resin and an active material.

<Positive electrode active material>

The positive electrode active material is not particularly limited, and for example, for secondary battery applications, metal compounds such as metal oxides and metal sulfides that can reversibly dope or intercalate lithium ions can be used. Examples thereof include composite oxide powders of lithium and transition metals such as lithium manganese composite oxide (for example, $Li_xMn_2O_4$ or $Li_xMnO_2$), lithium nickel composite oxide (for example, $Li_xNiO_2$), lithium cobalt composite oxide ($Li_xCoO_2$), lithium nickel cobalt composite oxide (for example, $Li_xNi_{1-y}Co_yO_2$), lithium manganese cobalt composite oxide (for example, $Li_xMn_yCo_{1-y}O_2$), lithium nickel manganese cobalt composite oxide (for example, $Li_xNi_yCo_zMn_{1-y-z}O_2$), and spinel type lithium manganese nickel composite oxide (for example, $Li_xMn_{2-y}Ni_yO_4$), lithium phosphate powders having an olivine structure (for example, $Li_xFePO_4$, $Li_xFe_{1-y}Mn_yPO_4$, $Li_xCoPO_4$, etc.), transition metal oxide powders of manganese oxide, iron oxide, copper oxide, nickel oxide, vanadium oxide (for example, $V_2O_5$, $V_6O_{13}$), titanium oxide and the like, and transition metal sulfide powders of iron sulfate ($Fe_2(SO_4)_3$), $TiS_2$, and FeS. However, x, y, and z are numbers, and $0<x<1$, $0<y<1$, $0<z<1$, and $0<y+z<1$. These positive electrode active materials may be used alone or a plurality thereof may be in combination.

Among these active materials, particularly, because an active material containing Ni and/or Mn (especially when the total amount of Ni and/or Mn in the transition metal is 50 mol% or more) tends to become strongly basic due to dissolution of the raw material-derived component or metal ions, and due to its influence, gelation of the binder and deterioration of the dispersion state are likely to occur, the problems of the present invention may be noticeable. Therefore, in the case of a battery containing an active material containing Ni and/or Mn, the present invention is particularly effective.

<Negative electrode active material>

The negative electrode active material is not particularly limited, and for example, metallic Li that can reversibly dope or intercalate lithium ions, its alloys, tin alloys, silicon alloy negative electrodes, metal oxides such as $Li_XTiO_2$, $Li_XFe_2O_3$, and $Li_XFe_3O_4$, $Li_XWO_2$, conductive polymers such as polyacetylene and poly-p-phenylene, artificial graphite such as a highly graphitized carbon material, carbon powders such as natural graphite, and a resin-burned carbon

material can be used. However, X is a number and, $0<X<1$.

These negative electrode active materials may be used alone or a plurality thereof may be used in combination. Particularly, when a silicon alloy negative electrode is used, although theoretical capacity is large, the volume expansion is very large, and thus it is preferable to use it in combination with artificial graphite such as a highly graphitized carbon material or carbon powder such as natural graphite, a resin-burned carbon material or the like.

When the conductive material in the mixture composition is CNT, the content of CNT based on the mass of the active material (when the mass of the active material is set to 100 mass%) is preferably 0.01 mass% or more, more preferably 0.02 mass% or more, and still more preferably 0.03 mass % or more. In addition, the content is preferably 10 mass% or less, more preferably 5 mass% or less, and still more preferably 3 mass% or less. In addition, in the case of the conductive material AB, the content of AB based on the mass of the active material (when the mass of the active material is set to 100 mass%) is preferably 1 mass% or more, more preferably 2 mass% or more, and still more preferably 3 mass % or more. In addition, the content is preferably 20 mass% or less and more preferably 10 mass% or less. Here, the conductive material may be CNT and AB in combination, or two or more thereof may be used, but the total amount thereof added is preferably within the above range. If the amount is above the above range, the amount of the active material filled into the electrode decreases and the capacity of the battery decreases. In addition, if the amount is below the above range, the conductivity of the electrode and the battery may be insufficient.

The content of the dispersant in the mixture composition based on the mass of the active material (when the mass of the active material is set to 100 mass%) is preferably 0.01 mass% or more and more preferably 0.02 mass% or more. In addition, the content is preferably 10 mass% or less and more preferably 5 mass% or less.

When the mixture composition contains a binder resin, the content of the binder resin in the mixture composition based on the mass of the active material (when the mass of the active material is set to 100 mass%) is preferably 0.5 mass% or more and more preferably 0.5 mass% or more. In addition, the content is preferably 30 mass% or less, more preferably 25 mass% or less, and still more preferably 20 mass% or less.

The content of the solid component in the mixture composition based on the mass of the mixture composition (when the mass of the mixture composition is set to 100 mass%) is preferably 30 mass% or more and more preferably 40 mass% or more. In addition, the content is preferably 90 mass% or less and more preferably 80 mass% or less.

The mixture composition can be produced by various conventionally known methods. Examples thereof include a method of adding an active material to a conductive material dispersion for production; a method of adding an active material to a conductive material dispersion and then adding a binder resin for production; and a method of adding a binder resin to a conductive material dispersion and then adding an active material for production. As a method of producing a mixture composition, a method of adding a binder resin to a conductive material dispersion, then additionally adding an active material and performing a dispersion treatment is preferable. A dispersing device used for dispersion is not particularly limited. A mixture composition can be obtained using a dispersion unit exemplified in the description of the conductive material dispersion. Therefore, as the method of producing a mixture composition, a treatment of adding an electrode active material and performing dispersion may be performed without adding a binder resin to the conductive material dispersion.

<Electrode film>

An electrode film according to one embodiment of the present invention includes at least one selected from the group consisting of a film formed using the conductive material dispersion according to the above embodiment and a film formed using the secondary battery electrode composition according to the above embodiment. The electrode film may further contain a collector.

The electrode film can be obtained, for example, by applying a secondary battery electrode composition onto a collector and drying it, and includes a collector and a film. An electrode film formed using a positive electrode mixture composition can be used as a positive electrode. An electrode film formed using a negative electrode mixture composition can be used as a negative electrode. In this specification, a film formed using a secondary battery electrode composition containing an active material may be referred to as an "electrode mixture layer."

The material and shape of the collector used for forming the electrode film are not particularly limited, and those suitable for various secondary batteries can be appropriately selected. Examples of materials of collectors include conductive metals or alloys of aluminum, copper, nickel, titanium, and stainless steel. In addition, as the shape, a flat foil is generally used, but a collector with a roughened surface, a perforated foil collector, and a mesh-like collector can also be used. The thickness of the collector is preferably about 0.5 to 30 $\mu$m.

The method of applying a conductive material dispersion or a secondary battery electrode composition onto a collector is not particularly limited, and known methods can be used. Specific examples of coating methods include a die coating method, a dip coating method, a roll coating method, a doctor coating method, a knife coating method, a spray coating method, a gravure coating method, a screen printing method and an electrostatic coating method. Examples of drying methods include drying by being left and drying using a blowing dryer, a hot air dryer, an infrared heating

machine, and an infrared heating machine, but the present invention is not particularly limited thereto.

After coating, a rolling treatment may be performed using a lithographic press, calendar rollers or the like. The thickness of the formed film is, for example, 1 μm or more and 500 μm or less, and preferably 10 μm or more and 300 μm or less.

A film formed using a conductive material dispersion or a secondary battery electrode composition can also be used as a base layer for the electrode mixture layer. When such a base layer is provided, it is possible to improve the adhesion between the electrode mixture layer and the collector or to improve conductivity of the electrode film.

<Secondary battery>

A secondary battery according to one embodiment of the present invention includes a positive electrode, a negative electrode, and an electrolyte, and at least one selected from the group consisting of the positive electrode and the negative electrode includes the electrode film according to the above embodiment.

As the electrolyte, various conventionally known substances in which ions can move can be used. For example, the electrolyte may contain a lithium salt such as $LiBF_4$, $LiClO_4$, $LiPF_6$, $LiAsF_6$, $LiSbF_6$, $LiCF_3SO_3$, $Li(CF_3SO_2)_2N$, $LiC_4F_9SO_3$, $Li(CF_3SO_2)_3C$, LiI, LiBr, LiCl, LiAlCl, $LiHF_2$, LiSCN, or $LiBPh_4$ (where, Ph is a phenyl group), but the present invention is not limited. The electrolyte is preferably dissolved in a non-aqueous solvent and used as an electrolytic solution.

The non-aqueous solvent is not particularly limited, and examples thereof include carbonates such as ethylene carbonate, propylene carbonate, butylene carbonate, dimethyl carbonate, ethyl methyl carbonate, and diethyl carbonate; lactones such as γ-butyrolactone, γ-valerolactone, and γ-octanoic lactone; glymes such as tetrahydrofuran, 2-methyltetrahydrofuran, 1,3-dioxolane, 4-methyl-1,3-dioxolane, 1,2-methoxyethane, 1,2-ethoxyethane, and 1,2-dibutoxyethane; esters such as methyl formate, methyl acetate, and methyl propionate; sulfoxides such as dimethylsulfoxide and sulfolane; and nitriles such as acetonitrile. These solvents may be used alone or two or more thereof may be used in combination.

The non-aqueous electrolyte secondary battery preferably includes a separator. Examples of separators include polyethylene nonwoven fabrics, polypropylene nonwoven fabrics, polyamide nonwoven fabrics, and non-woven fabrics obtained by subjecting these to a hydrophilic treatment, but the present invention is not particularly limited thereto.

The structure of the non-aqueous electrolyte secondary battery of the present embodiment is not particularly limited. In one embodiment, the non-aqueous electrolyte secondary battery may generally include a positive electrode and a negative electrode, and a separator that is provided as necessary. The non-aqueous electrolyte secondary battery can have various shapes such as a paper shape, a cylindrical shape, a button shape, and a laminated shape depending on the purpose of use.

Examples

The present invention will be described below in further detail with reference to examples. The present invention is not limited to the following examples as long as other examples do not depart from the gist thereof. Here, unless otherwise specified, "parts" indicates "parts by mass" and "%" indicates "mass%."

<Evaluation and analysis of polymer>

(Method of measuring Mooney viscosity ($ML_{1+4,}$100°C) of polymer)

After a polymer was dissolved in NMP, purified water was added dropwise to a polymer/NMP solution, and the polymer was coagulated. The coagulate was collected, washed with methanol, transferred to a petri dish, and dried under a reduced pressure at 60°C for 12 hours to obtain 40 g of a measurement flat sample. The Mooney viscosity ($ML_{1+4}$, 100°C) of the obtained sample was measured at a temperature of 100°C using an L-shaped rotor according to Japanese Industrial Standard JIS K 6300-1.

(Measurement of hydrogenation rate of polymer)

The hydrogenation rate was obtained from the measured value by performing IR measurement by an infrared spectroscopic analysis method according to a total reflection measurement method. Specifically, a peak appears at 970 $cm^{-1}$ for a double bond derived from a conjugated diene monomer unit and a peak appears at 723 $cm^{-1}$ for a hydrogenated single bond. The hydrogenation rate was calculated from the height ratio of these two peaks.

(Structure analysis of polymer)

The content of the structural unit of the polymer was determined using a nuclear magnetic resonance device (ADVANCE400Nanobay: Bruker Japan) from a $^1$H-NMR quantitative spectrum obtained using a measurement solvent $(D_3C)_2S=O$, and a 1 mm NMR tube and a $^{13}$C-NMR quantitative spectrum obtained using a measurement solvent $(D_3C)_2S=O$, and a 10 mm NMR tube. However, when a peak derived from a structure in which a polymerization initiator or a chain transfer agent was bound to a polymer was detected, the content was calculated by excluding it from the content of each structural unit in the polymer.

<Production of polymer>

(Production Example 1: production of polymer 1 solution)

30 parts of acrylonitrile, 70 parts of 1,3-butadiene, 3 parts of potassium oleate soap, 0.3 parts of azobisisobutyronitrile, 0.48 parts of t-dodecyl mercaptan, and 200 parts of deionized water were put into a stainless steel polymerization reactor. Polymerization was performed at 45°C for 20 hours while stirring in a nitrogen atmosphere, and the polymerization was completed at a conversion rate of 90%. An acrylonitrile-conjugated diene rubber latex having a solid component concentration of about 30% was obtained by removing unreacted monomers by decompression stripping.

Subsequently, deionized water was added to latex, a total solid component concentration was adjusted to 12%, the mixture was put into an autoclave having a stirrer with a volume of 1 L, nitrogen gas was flowed for 10 minutes, and dissolved oxygen in the content was removed. A catalyst solution prepared by dissolving 75 mg of palladium acetate as a hydrogenation catalyst in 180 mL of deionized water in which nitric acid with a molar concentration 4 times that of palladium was added was added to the autoclave. After the inside of the autoclave was purged with hydrogen gas twice, the content in the autoclave that was pressurized to 3 MPa with hydrogen gas was heated to 50°C, and a hydrogenation reaction was performed for 6 hours.

Then, the temperature of the content was returned to room temperature, the inside of the autoclave was made into a nitrogen atmosphere, and the solid component was then dried to collect a polymer product. The obtained polymer product was dissolved in NMP to prepare a 7% solution, a square-hole high shear screen was attached to a high shear mixer (L5M-A, commercially available from Silverson Co., Ltd.), and a shear force was applied at a speed of 8,600 rpm for 1 hour to obtain a polymer 1 solution having a concentration of 7%.

(Production Example 2: production of polymer 2 solution)

A polymer 2 solution having a concentration of 7% was obtained in the same manner as in Production Example 1 except that the content of t-dodecyl mercaptan, which is a molecular weight adjusting agent used, was changed to 0.6 parts.

(Production Example 3: production of polymer 3 solution)

A polymer 3 solution having a concentration of 7% was obtained in the same manner as in Production Example 1 except that the content of t-dodecyl mercaptan, which is a molecular weight adjusting agent used, was changed to 0.65 parts, and a high pressure homogenizer (Star Burst Labo HJP-17007, commercially available from Sugino Machine Ltd.) was used in place of a high shear mixer for treatment. The treatment using a high pressure homogenizer was performed using a single nozzle chamber with a nozzle diameter of 0.25 mm and a pressure of 100 MPa.

(Production Example 4: production of polymer 4 solution)

Hydrogenated nitrile rubber (hydrogenated acrylonitrile-butadiene rubber, Therban(R) 3406 commercially available from ARLANXEO) was dissolved in NMP to prepare a 7% solution. A square-hole high shear screen was attached to a high shear mixer (L5M-A, commercially available from Silverson Co., Ltd.), and a shear force was applied to the solution at a speed of 8,600 rpm for 1 hour to obtain a polymer 4 solution having a concentration of 7%.

(Production Example 5: production of polymer 5 solution)

A polymer 5 solution having a concentration of 7% was obtained in the same manner as in Production Example 4 except that hydrogenated nitrile rubber (hydrogenated acrylonitrile-butadiene rubber, Therban (R) AT 3404 commercially available from ARLANXEO) was used.

(Production Example 6: production of polymer 6 solution)

A polymer 6 solution having a concentration of 7% was obtained in the same manner as in Production Example 4 except that hydrogenated nitrile rubber (hydrogenated acrylonitrile-butadiene rubber, Zetpol (R) 2000L commercially available from Zeon Corporation) was used.

(Production Example 7: production of polymer 7 solution)

30 parts of acrylonitrile, 70 parts of 1,3-butadiene, 3 parts of potassium oleate soap, 0.3 parts of azobisisobutyronitrile, 0.6 parts of t-dodecyl mercaptan, and 200 parts of deionized water were put into a stainless steel polymerization reactor. Polymerization was performed at 45°C for 20 hours while stirring in a nitrogen atmosphere, and the polymerization was completed at a conversion rate of 90%. An acrylonitrile-conjugated diene rubber latex having a solid component concentration of about 30% was obtained by removing unreacted monomers by decompression stripping. Subsequently, deionized water was added to latex, a total solid component concentration was adjusted to 12%, the mixture was put into an autoclave having a stirrer with a volume of 1 L, nitrogen gas was flowed for 10 minutes, and dissolved oxygen in the content was removed. A catalyst solution prepared by dissolving 75 mg of palladium acetate as a hydrogenation catalyst in 180 mL of deionized water in which 4 times molar nitric acid was added to palladium was added to the autoclave. After the inside of the autoclave was purged with hydrogen gas twice, the content in the autoclave that was pressurized to 3 MPa with hydrogen gas was heated to 50°C, and a hydrogenation reaction was performed for 6 hours. Then, the temperature of the content was returned to room temperature, the inside of the autoclave was made into a nitrogen atmosphere, and the solid component was then dried to collect a polymer product. The obtained polymer product was dissolved in NMP to obtain a polymer 7 solution having a concentration of 7%.

(Production Example 8: production of polymer 8 solution)

Hydrogenated nitrile rubber (hydrogenated acrylonitrile-butadiene rubber, Therban (R) 3407 commercially available from ARLANXEO) was dissolved in NMP to obtain a polymer 8 solution having a concentration of 7%.

(Production Example 9: production of polymer 9 solution)

Hydrogenated nitrile rubber (hydrogenated acrylonitrile-butadiene rubber, Therban (R) 3629 commercially available from ARLANXEO) was dissolved in NMP to obtain a polymer 7 solution having a concentration of 7%.
Table 1 shows the Mooney viscosity, the hydrogenation rate, and the ratio of aliphatic hydrocarbon structural units and nitrile group-containing structural units in the polymer of Polymers 1 to 9.

[Table 1]

Table 1

| Production Example | Polymer | Structural unit ratio | | Mooney viscosity ($ML_{1+4,}$100°C) | Hydrogenation rate [%] |
|---|---|---|---|---|---|
| | | aliphatic hydrocarbon structural unit | nitrile group-containing structural unit | | |
| Production Example 1 | Polymer 1 | 70 | 30 | 65 | 1.2 |
| Production Example 2 | Polymer 2 | 70 | 30 | 39 | 0.7 |
| Production Example 3 | Polymer 3 | 70 | 30 | 20 | 0.4 |
| Production Example 4 | Polymer 4 | 66 | 34 | 51 | 0.3 |
| Production Example 5 | Polymer 5 | 66 | 34 | 32 | 0.5 |

(continued)

| Production Example | Polymer | Structural unit ratio | | Mooney viscosity ($ML_{1+4,}$100°C) | Hydrogenation rate [%] |
|---|---|---|---|---|---|
| | | aliphatic hydrocarbon structural unit | nitrile group-containing structural unit | | |
| Production Example 6 | Polymer 6 | 64 | 36 | 56 | 2.2 |
| Production Example 7 | Polymer 7 | 70 | 30 | 45 | 0.7 |
| Production Example 8 | Polymer 8 | 66 | 34 | 70 | 0.3 |
| Production Example 9 | Polymer 9 | 64 | 36 | 87 | 2.0 |

<Evaluation of conductive material>

(Method of measuring acidic group amount of conductive material)

The acidic group amount of the conductive material was calculated by determining the amount of hexylamine adsorbed by back titration as follows.

0.2 g of the conductive material was collected in a glass bottle (M-70, commercially available from Hakuyo Glass Co., Ltd.), and 30 ml of a hexylamine/NMP solution (0.02 mol/l) was added. Ultrasonic waves (a frequency of 28 Hz) were emitted to the glass bottle for 1 hour, and coarse particles were removed with a nylon mesh having an opening of 25 μm. In addition, centrifugation was performed using a centrifuge (Mini Centrifuge MCF-1350 (commercially available from LMS)) at 10,000 rpm for 10 minutes, the supernatant was collected, filtration was performed using a membrane filter (filter pore size of 0.22 μm), and the filtrate was collected.

10 ml of the obtained filtrate was collected and diluted with 40 ml of deionized water to prepare a solution to be titrated. In addition, the conductive material and 10 ml of a hexylamine/NMP solution (0.02 mol/l) that was not subjected to an ultrasonic treatment were diluted with 40 ml of deionized water to prepare a standard solution to be titrated. The solution to be titrated and the standard solution to be titrated were separately titrated with a 0.1 Mol/l HCl/ethanol solution using an automatic potentiometric titrator (AT-710S, commercially available from Kyoto Electronics Manufacturing Co., Ltd.), and the amount of hexylamine adsorbed to the conductive material ([amount of hexylamine adsorbed] (μmol)) was calculated from the difference in the amount of titration at the isoelectric point.

10 ml of the solution to be titrated was collected from 30 ml of a hexylamine/NMP solution, and the CNT mass was 0.2 g, a value obtained by multiplying the [amount of hexylamine adsorbed] by 3 and dividing by 0.2 was the [amount of hexylamine adsorbed] (μmol/g) per unit weight of the conductive material, and a value obtained by additionally dividing by the specific surface area of the conductive material was the [amount of hexylamine adsorbed] (μmol/$m^2$) per CNT surface area.

(Method of measuring specific surface area of conductive material)

0.03 g of the conductive material was weighed out using an electronic scale (MSA225S100DI commercially available from Sartorius) and then dried at 110°C for 15 minutes while deaerating. Then, the specific surface area ($m^2$/g) of the conductive material was measured using a fully automatic specific surface area measuring device (HM-model1208 commercially available from MOUNTECH).

In examples, the following conductive materials were used.

- 10B: JENOTUBE10B (commercially available from JEIO, multi-walled CNT, an average outer diameter of 10 nm, a specific surface area of 230 $m^2$/g, an acidic group amount of 0.67 μmol/$m^2$, 154 μmol/g)
- BT1003M: LUCAN BT1003M (commercially available from LG Chem Ltd., multi-walled CNT, an average outer diameter of 13 nm, a specific surface area of 201 $m^2$/g, an acidic group amount of 0.25 μmol/$m^2$, 50 μmol/g)
- 6A: JENOTUBE6A (commercially available from JEIO, multi-walled CNT, an average outer diameter of 6 nm, a specific surface area of 700 $m^2$/g, an acidic group amount of 0.27 μmol/$m^2$, 190 μmol/g)
- TUBALL: single-walled carbon nanotube (commercially available from OCSiAl, an average outer diameter of 1.6

nm, a purity of 93%, a specific surface area of 975 $m^2$/g, an acidic group amount of 0.21 μmol/$m^2$, 205 μmol/g)

- Li-400: Denka Black Li-400 (commercially available from Denka Co., Ltd., acetylene black, an average primary particle size of 48 nm, a specific surface area of 39 $m^2$/g, a specific surface area of 975 $m^2$/g, an acidic group amount of 0.21 μmol/$m^2$, 205 μmol/g)

<Evaluation of conductive material dispersion>

(Method of measuring dispersion particle size)

The dispersion particle size of the conductive material dispersion was obtained by a determination method according to JIS K 5600-2-5 using a grind gauge with a maximum groove depth of 300 μm.

(Method of measuring viscosity of conductive material dispersion)

The viscosity of the conductive material dispersion was measured using a type B viscometer ("BL" commercially available from Toki Sangyo Co., Ltd.) at a dispersion solution temperature of 25°C after the dispersion solution was sufficiently stirred with a spatula, immediately with a type B viscometer at a rotor rotation speed of 6 rpm, and subsequently at 60 rpm. A lower viscosity indicates better dispersion, and a higher viscosity indicates poorer dispersion. When the obtained dispersion solution was clearly separated or precipitated, it was determined as poor dispersion. In addition, the TI value was obtained from the value obtained by dividing the viscosity (mPa.s) at 60 rpm by the viscosity (mPa.s) at 6 rpm.

(Initial viscosity determination criteria)

◎: less than 500 mPa·s (excellent)
O: 500 mPa·s or more and less than 2,000 mPa·s (good)
Δ: 2,000 mPa·s or more and less than 10,000 mPa·s (acceptable)
×: 10,000 mPa·s or more, precipitated or separated (poor)

(TI value determination criteria)

◎: less than 3.0 (excellent)
O: 3.0 or more and less than 5.0 (good)
Δ: 5.0 or more and less than 7.0 (poor)
×: 7.0 or more, precipitated or separated (unacceptable)

(Method of measuring gloss)

A sample for gloss measurement was obtained by adding 1 mL of a conductive material dispersion onto a smooth glass substrate, applying it at 2 cm/sec with a No. 7 bar coater, and then baking it in a hot air oven at 140°C for 10 minutes and performing cooling. The coating area was about 10 cm×10 cm. Using a gloss meter (gloss meter micro-gloss 60° commercially available from BYK Gardner), three locations on the coating surface excluding the edges were randomly selected and measured once, and the average value was taken as the gloss at 60°.

(Gloss determination criteria)

◎: 50 or more (excellent)
O: 30 or more and less than 50 (good)
Δ: 10 or more and less than 30 (poor)
×: less than 10 (unacceptable)

(Particle size measurement method for median diameter of conductive material dispersion)

The median diameter was measured using a particle size distribution measuring device (Partical LA-960 V2, commercially available from Horiba Ltd.). Circulation/ultrasound operation conditions were circulation speed: 3, ultrasound intensity: 7, ultrasound duration: 1 minute, stirring speed: 1, and stirring mode: continuous. In addition, during air venting, an ultrasonic operation was performed at an ultrasound intensity of 7 for an ultrasound duration of 5 seconds. The refractive index of water was 1.333, and the refractive index of the carbon material was 1.92. The measurement was performed after the measurement sample was diluted so that the transmittance of a red laser diode was 60 to 80%, and the particle size was based on the volume.

(Median diameter determination criteria)

O: 0.4 μm or more and less than 2.0 μm (excellent)
Δ: 2.0 μm or more and less than 5.0 μm (good)
×: less than 0.4 μm or 5.0 μm or more (unacceptable)

(Measurement of complex elastic modulus and phase angle of conductive material dispersion)

The complex elastic modulus X and the phase angle Y of the conductive material dispersion were evaluated by performing dynamic viscoelasticity measurement at 25°C and a frequency of 1 Hz in a strain rate range of 0.01% to 5% using a rheometer with a diameter of 60 mm and 2° cone (RheoStress 1 rotational rheometer commercially available from Thermo Fisher Scientific). If the obtained complex elastic modulus was smaller, the dispersion was better, and if the obtained complex elastic modulus was larger, the dispersion was poor. In addition, if the obtained phase angle was larger, the dispersion was better, and if the obtained phase angle was smaller, the dispersion was poor. In addition, the product (X×Y) of the obtained complex elastic modulus X (Pa) and phase angle Y(°) was calculated.

(Method of evaluating storage stability of conductive material dispersion)

In order to evaluate the storage stability, the viscosity was measured after the dispersion solution was left and stored at 50°C for 7 days. For measurement, the measurement method was the same as the initial viscosity.

(Storage stability determination criteria)

◎: equivalent to initial value (excellent)
O: viscosity changed slightly (good)
Δ: viscosity increased but gelation did not occur (poor)
×: gelled (very poor)

(Calculation of average fiber length of CNT and average structure length of AB)

A small amount of a sample obtained by adding a small amount of NMP to the conductive material dispersion while stirring with a disper and diluting it with 50-fold was added dropwise to a substrate with a smooth surface and dried to obtain an observation sample. The obtained observation sample was observed and imaged using a scanning electron microscope. When the conductive material was CNT, in the observation image, 300 arbitrary CNTs were selected, their fiber lengths were measured, and the average value thereof was calculated as the average fiber length. When the conductive material was AB, in the observation image, 100 arbitrary AB pieces were selected, their structure lengths were measured, and the average value thereof was calculated as the average structure length.

<Production of conductive material dispersion>

(Example 1-1)

A polymer 1 solution having a concentration of 7% and NMP were added to a stainless steel container so that the amount of the polymer was 0.6 parts by mass, and a total amount of NMP was 91.1 parts by mass, and additionally,

3.0 parts by mass of 10B (CNT) was taken and added while stirring with a disper, a square-hole high shear screen was attached to a high shear mixer (L5M-A, commercially available from Silverson Co., Ltd.), and batch type dispersion was performed at a speed of 8,600 rpm until the entire component became uniform and the dispersion particle size checked with a grind gauge was 250 μm or less. In this case, the dispersion particle size checked with a grind gauge was 180 μm.

Subsequently, a solution to be dispersed was supplied from the stainless steel container through a pipe to a high pressure homogenizer (Star Burst Labo HJP-17007, commercially available from Sugino Machine Ltd.) and subjected to a circulation dispersion treatment. The dispersion treatment was performed using a single nozzle chamber with a nozzle diameter of 0.25 mm at a pressure of 100 MPa. Dispersion was performed until the viscosity of the solution to be dispersed measured at 60 rpm with a type B viscometer (commercially available from TOKI SANGYO, VISCOMETER, MODEL: BL) was 3,000 mPa·s or less. Next, while stirring with a disper, 1.0 part by mass of 10B and the polymer 1 solution were additionally added to the stainless steel container so that the amount of the polymer 1 was 0.2 parts by mass, and a circulation dispersion treatment was performed again with a high pressure homogenizer.

After circulation dispersion was performed using a high pressure homogenizer until the viscosity was 3,000 mPa·s or less, an operation of adding 10B and the polymer 1 solution to the stainless steel container while stirring with a disper was repeated again (a total amount of 10B added was 5.0 parts by mass). Subsequently, a 25-pass type dispersion treatment was performed using a high pressure homogenizer to obtain a conductive material dispersion containing 5.0 parts by mass of CNT (dispersion solution 1).

(Examples 1-2 to 1-7)

Conductive material dispersions (dispersion solutions 2 to 7) were obtained in the same manner as in Example 1-1 except that the polymer 1 solution was changed to the polymer solution shown in Table 2.

(Example 1-8)

A conductive material dispersion (dispersion solution 8) was obtained in the same manner as in Example 1-1 except that the type of the conductive material and the polymer solution were changed as shown in Table 2.

(Example 1-9)

A polymer 2 solution having a concentration of 7% and NMP were added to a stainless steel container so that the amount of the polymer was 0.5 parts by mass, and a total amount of NMP was 94.5 parts by mass, and 2 parts by mass of 6A (CNT) was taken and added while stirring with a disper, a square-hole high shear screen was attached to a high shear mixer (L5M-A, commercially available from Silverson Co., Ltd.), and batch type dispersion was performed at a speed of 8,600 rpm until the entire component became uniform and the dispersion particle size checked with a grind gauge was 250 μm or less. In this case, the dispersion particle size checked with a grind gauge was 180 μm.

Subsequently, a solution to be dispersed was supplied from the stainless steel container through a pipe to a high pressure homogenizer (Star Burst Labo HJP-17007, commercially available from Sugino Machine Ltd.) and subjected to a circulation dispersion treatment. The dispersion treatment was performed using a single nozzle chamber with a nozzle diameter of 0.25 mm at a pressure of 100 MPa. After dispersion was performed until the viscosity of the solution to be dispersed measured at 60 rpm with a type B viscometer (commercially available from TOKI SANGYO, VISCOMETER, MODEL: BL) was 3,000 mPa·s or less, while stirring with a disper, 0.5 parts by mass of 6A and the polymer 2 solution were additionally added to the stainless steel container so that the amount of the polymer 2 was 0.13 parts by mass, and a circulation dispersion treatment was performed again with a high pressure homogenizer.

After circulation dispersion was performed using a high pressure homogenizer until the viscosity was 3,000 mPa·s or less, an operation of adding 6A and the polymer 2 solution to the stainless steel container while stirring with a disper was repeated again (a total amount of 6A added was 3.0 parts by mass). Subsequently, a 25-pass type dispersion treatment was performed using a high pressure homogenizer to obtain a conductive material dispersion containing 3.0 parts by mass of CNT (dispersion solution 9).

(Example 1-10)

A polymer 2 solution having a concentration of 7% and NMP were added to a stainless steel container so that the amount of the polymer was 0.3 parts by mass, and a total amount of NMP was 97.1 parts by mass, and 0.5 parts by mass of TUBALL (CNT) was taken and added while stirring with a disper, a square-hole high shear screen was attached to a high shear mixer (L5M-A, commercially available from Silverson Co., Ltd.), and batch type dispersion was performed at a speed of 8,600 rpm until the entire component became uniform and the dispersion particle size checked with a grind gauge was 250 μm or less. In this case, the dispersion particle size checked with a grind gauge was 180 μm.

Subsequently, a solution to be dispersed was supplied from the stainless steel container through a pipe to a high pressure homogenizer (Star Burst Labo HJP-17007, commercially available from Sugino Machine Ltd.) and subjected to a circulation dispersion treatment. The dispersion treatment was performed using a single nozzle chamber with a nozzle diameter of 0.25 mm at a pressure of 100 MPa. After dispersion was performed until the viscosity of the solution to be dispersed measured at 60 rpm with a type B viscometer (commercially available from TOKI SANGYO, VISCOMETER, MODEL: BL) was 3,000 mPa·s or less, while stirring with a disper, 0.2 parts by mass of TUBALL and the polymer 2 solution were additionally added to the stainless steel container so that the amount of the polymer 2 was 0.1 parts by mass, and a circulation dispersion treatment was performed again with a high pressure homogenizer.

After circulation dispersion was performed using a high pressure homogenizer until the viscosity was 3,000 mPa·s or less, an operation of adding TUBALL and the polymer 2 solution to the stainless steel container while stirring with a disper was repeated again (a total amount of TUBALL added was 1.0 part by mass). Subsequently, a 25-pass type dispersion treatment was performed using a high pressure homogenizer to obtain a conductive material dispersion containing 1.0 part by mass of CNT (dispersion solution 10).

(Example 1-11)

A polymer 2 solution having a concentration of 7% and NMP were added to a stainless steel container so that the amount of the polymer was 0.6 parts by mass, and a total amount of NMP was 79.4 parts by mass, and while stirring with a disper, 20.0 parts by mass of Li-400 (AB) was taken and added while stirring with a disper, a square-hole high shear screen was attached to a high shear mixer (L5M-A, commercially available from Silverson Co., Ltd.), and batch type dispersion was performed at a speed of 8,600 rpm until the entire component became uniform and the dispersion particle size checked with a grind gauge was 250 μm or less. In this case, the dispersion particle size checked with a grind gauge was 180 μm.

Subsequently, a solution to be dispersed was supplied from the stainless steel container through a pipe to a high pressure homogenizer (Star Burst Labo HJP-17007, commercially available from Sugino Machine Ltd.) and subjected to a circulation dispersion treatment. The dispersion treatment was performed using a single nozzle chamber with a nozzle diameter of 0.25 mm at a pressure of 100 MPa. Dispersion was performed until the viscosity of the solution to be dispersed measured at 60 rpm with a type B viscometer (commercially available from TOKI SANGYO, VISCOMETER, MODEL: BL) was 3,000 mPa·s or less. Subsequently, a 7-pass type dispersion treatment was performed using a high pressure homogenizer to obtain a conductive material dispersion containing 20.0 parts by mass of AB (dispersion solution 11).

(Examples 1-12 to 1-14)

Conductive material dispersions (dispersion solutions 12 to 14) were obtained in the same manner as in Example 1-2 except that some of the NMP that was initially added to the stainless steel container in Example 1-2 was replaced with additives shown in Table 2.

(Example 1-15)

A conductive material dispersion (dispersion solution 15) was obtained in the same manner as in Example 1-2 except that a 7% PVP/NMP solution was prepared, and 40% of the polymer 2 solution used in Example 1-2 was replaced with a 7% PVP/NMP solution.

(Comparative Example 1-1)

A polymer 2 solution having a concentration of 7% and NMP were added to a stainless steel container so that the amount of the polymer was 0.6 parts by mass, and a total amount of NMP was 91.1 parts by mass, and 3.0 parts by mass of 10B (CNT) was taken and added while stirring with a disper, a square-hole high shear screen was attached to a high shear mixer (L5M-A, commercially available from Silverson Co., Ltd.), and batch type dispersion was performed at a speed of 8,600 rpm until the entire component became uniform and the dispersion particle size checked with a grind gauge was 250 μm or less. In this case, the dispersion particle size checked with a grind gauge was 180 μm.

Subsequently, a solution to be dispersed was supplied from the stainless steel container through a pipe to a bead mill (pico mill, commercially available from Asada Iron Works Co., Ltd.) and subjected to a circulation dispersion treatment. Zirconia beads having a diameter of 0.5 mm were used at a filling rate of 80%. After circulation dispersion was performed until the viscosity of the solution to be dispersed was 3,000 mPa·s or less, while stirring with a disper, 1.0 part by mass of 10B and the polymer 2 solution were additionally added to the stainless steel container so that the amount of the polymer 1 was 0.2 parts by mass, and a circulation dispersion treatment was performed again with a bead

mill.

After circulation dispersion was performed using a bead mill until the viscosity was 3,000 mPa·s or less, an operation of adding 10B and the polymer 2 solution to the stainless steel container while stirring with a disper was repeated again (a total amount of 10B added was 5.0 parts by mass). Subsequently, a 25-pass type dispersion treatment was performed using a bead mill to obtain a conductive material dispersion containing 5.0 parts by mass of CNT (comparative dispersion solution 1).

(Comparative Example 1-2)

A conductive material dispersion containing 5.0 parts by mass of CNT (comparative dispersion solution 2) was obtained in the same manner as in Example 1-2 except that the number of pass dispersion treatments performed with a high pressure homogenizer in Example 1-2 was set to 10 instead of 25.

(Comparative Examples 1-3 and 1-4)

Conductive material dispersions (comparative dispersion solutions 3 and 4) were obtained in the same manner as in Example 1-1 except that the polymer 1 solution in Example 1-1 was changed to the polymer solution shown in Table 2.

[Table 2]

Table 2

| Example, Comparative Example | Conductive material dispersion | Conductive material | | Polymer | | Additive | |
|---|---|---|---|---|---|---|---|
| | | Type | Concentration in dispersion (parts by mass) | Type | Concentration in dispersion (parts by mass) | Type | Concentration in dispersion (parts by mass) |
| Example 1-1 | Dispersion 1 | 10B | 5.0 | Polymer 1 | 1.0 | - | 0 |
| Example 1-2 | Dispersion 2 | 10B | 5.0 | Polymer 2 | 1.0 | - | 0 |
| Example 1-3 | Dispersion 3 | 10B | 5.0 | Polymer 3 | 1.0 | - | 0 |
| Example 1-4 | Dispersion 4 | 10B | 5.0 | Polymer 4 | 1.0 | - | 0 |
| Example 1-5 | Dispersion 5 | 10B | 5.0 | Polymer 5 | 1.0 | - | 0 |
| Example 1-6 | Dispersion 6 | 10B | 5.0 | Polymer 6 | 1.0 | - | 0 |
| Example 1-8 | Dispersion 8 | BT1003M | 5.0 | Polymer 2 | 1.0 | - | 0 |
| Example 1-9 | Dispersion 9 | 6A | 3.0 | Polymer 2 | 0.75 | - | 0 |
| Example 1-10 | Dispersion 10 | TUBALL | 1.0 | Polymer 2 | 0.5 | - | 0 |
| Example 1-11 | Dispersion 11 | Li-400 | 20 | Polymer 2 | 0.6 | - | 0 |
| Example 1-12 | Dispersion 12 | 10B | 5.0 | Polymer 2 | 1.0 | aminoethanol | 0.04 |
| Example 1-13 | Dispersion 13 | 10B | 5.0 | Polymer 2 | 1.0 | NaOH | 0.01 |
| Example 1-14 | Dispersion 14 | 10B | 5.0 | Polymer 2 | 1.0 | BuONa | 0.01 |

(continued)

| Example, Comparative Example | Conductive material dispersion | Conductive material | | Polymer | | Additive | |
|---|---|---|---|---|---|---|---|
| | | Type | Concentration in dispersion (parts by mass) | Type | Concentration in dispersion (parts by mass) | Type | Concentration in dispersion (parts by mass) |
| Example 1-15 | Dispersion 15 | 10B | 5.0 | Polymer 2 | 0.6 | PVP | 0.4 |
| Comparative Example 1-1 | Comparative dispersion 1 | 10B | 5.0 | Polymer 2 | 1.0 | - | 0 |
| Comparative Example 1-2 | Comparative dispersion 2 | 10B | 5.0 | Polymer 2 | 1.0 | - | 0 |
| Comparative Example 1-3 | Comparative dispersion 3 | 10B | 5.0 | Polymer 7 | 1.0 | - | 0 |
| Comparative Example 1-4 | Comparative dispersion 4 | 10B | 5.0 | Polymer 8 | 1.0 | - | 0 |

Here, additives shown in Table 2 are as follows.

- aminoethanol: 2-aminoethanol (commercially available from Tokyo Chemical Industry Co., Ltd., purity>99.0%)
- NaOH: sodium hydroxide (commercially available from Tokyo Chemical Industry Co., Ltd., purity>98.0%, granular)
- BuONa: sodium-t-butoxide (commercially available from Tokyo Chemical Industry Co., Ltd., purity>98.0%)
- PVP: polyvinylpyrrolidone K-30 (commercially available from Nippon Shokubai Co., Ltd., a non-volatile content of 100%, an acid value of 0 mg KOH/g)

Table 3 shows the evaluation results of the conductive material dispersions.

[Table 3]

Table 3

| Example, Comparative Example | Initial viscosity | TI value | Gloss | Median diameter | Storage stability | Complex elastic modulus X (Pa) | Phase angle Y (°) | X×Y | Average fiber length average structure length (μm) |
|---|---|---|---|---|---|---|---|---|---|
| Example 1-1 | O | O | O | O | O | 3.1 | 52 | 161 | 0.8 |
| Example 1-2 | ◎ | ◎ | ◎ | O | ◎ | 7.3 | 48 | 350 | 1.1 |
| Example 1-3 | ◎ | ◎ | O | O | ◎ | 4.4 | 54 | 238 | 1.0 |
| Example 1-4 | O | O | O | O | O | 10.5 | 49 | 515 | 0.8 |
| Example 1-5 | ◎ | ◎ | ◎ | O | ◎ | 5.6 | 51 | 286 | 0.9 |
| Example 1-6 | O | O | O | O | O | 6.9 | 47 | 324 | 0.8 |
| Example 1-8 | ◎ | ◎ | ◎ | O | ◎ | 25.4 | 46 | 1,168 | 0.9 |
| Example 1-9 | ◎ | ◎ | ◎ | O | ◎ | 9.2 | 49 | 451 | 1.1 |
| Example 1-10 | ◎ | O | ◎ | O | ◎ | 21.7 | 37 | 803 | 3.0 |
| Example 1-11 | O | ◎ | O | O | ◎ | 2.2 | 50 | 110 | 1.0 |
| Example 1-12 | ◎ | ◎ | ◎ | O | O | 6.8 | 51 | 347 | 1.0 |
| Example 1-13 | ◎ | ◎ | ◎ | O | O | 4.7 | 57 | 268 | 1.0 |
| Example 1-14 | ◎ | ◎ | ◎ | O | O | 4.2 | 56 | 235 | 1.0 |
| Example 1-15 | O | ◎ | O | O | O | 64.3 | 20 | 1,286 | 1.0 |
| Comparative Example 1-1 | O | O | O | × | × | 0.81 | 33 | 27 | 0.6 |
| Comparative Example 1-2 | × | × | Δ | × | × | 280.3 | 19 | 5,186 | 0.8 |
| Comparative Example 1-3 | Δ | Δ | Δ | Δ | × | 114.8 | 16 | 1,883 | 0.8 |

(continued)

| Example, Comparative Example | Initial viscosity | TI value | Gloss | Median diameter | Storage stability | Complex elastic modulus X (Pa) | Phase angle Y (°) | X×Y | Average fiber length average structure length (μm) |
|---|---|---|---|---|---|---|---|---|---|
| Comparative Example 1-4 | × | × | × | × | × | 298.1 | 14 | 4,114 | 0.8 |

<Production of positive electrode mixture composition and positive electrode>

(Example 2-1a)

A conductive material dispersion (dispersion solution 1) and PVdF dissolved in NMP in advance to reach 8% (solef5130, commercially available from solvay, a non-volatile content of 100%) were added to a plastic container with volume of 150 $cm^3$ and the mixture was then stirred at 2,000 rpm for 30 seconds using the rotation/revolution mixer (Awatori Rentaro, ARE-310 commercially available from Thinky Corporation), and NMC1 (NCM523, $LiNi_{0.5}Co_{0.2}Mn_{0.3}O_2$, commercially available from Nippon Chemical Industrial Co., Ltd., a non-volatile content of 100%) as a positive electrode active material was then added, and the mixture was stirred at 2,000 rpm for 150 seconds using the rotation/revolution mixer (Awatori Rentaro, ARE-310 commercially available from Thinky Corporation) to obtain a positive electrode mixture composition. The non-volatile content of the positive electrode mixture composition was 77 mass%. The non-volatile content ratio of NMC1:10B:PVdF in the non-volatile content of the positive electrode mixture composition was 98:0.5:1.5.

The positive electrode mixture composition was applied onto an aluminum foil having a thickness of 20 μm using an applicator, and then dried in an electric oven at 120°C±5°C for 25 minutes to produce an electrode film. Then, the electrode film was rolled by a roll press (3t hydraulic roll press commercially available from Thank-Metal Co., Ltd.) to obtain a positive electrode (positive electrode 1a). Here, the basis weight per unit of the mixture layer was 20 mg/$cm^2$, and the density of the mixture layer after the rolling treatment was 3.2 g/cc.

(Examples 2-2a to 2-15a and Comparative Examples 2-1a to 2-4a)

Positive electrodes 2a to 15a and comparative positive electrodes 1a to 4a were obtained in the same method as in Example 2-1 except that, for the conductive material dispersion, respective conductive material dispersions (dispersion solutions 2 to 15 and comparative dispersion solutions 1 to 4) and the solid component composition ratio shown in Table 4 were used.

<Evaluation of positive electrode>

(Method of evaluating conductivity of positive electrode)

For the obtained positive electrode, the surface resistivity (Ω/□) of the mixture layer was measured using Loresta GP, MCP-T610 (commercially available from Mitsubishi Chemical Analytech Co., Ltd.). After the measurement, the thickness of the mixture layer was multiplied to obtain the volume resistivity (Q.cm) of the positive electrode. The thickness of the mixture layer was obtained by subtracting the film thickness of the aluminum foil from the average value obtained by measuring the thickness at three points in the electrode using a film thickness meter (DIGIMICROMH-15M commercially available from Nikon Corporation) and used as the volume resistivity (Q.cm) of the positive electrode.

(Conductivity determination criteria)

◎: less than 10 Q.cm (excellent)
O: 10 Q.cm or more and less than 20 Q.cm (good)
Δ: 20 Q.cm or more and less than 30 Q.cm (poor)
×: 30 Q.cm or more (unacceptable)

(Method of evaluating adhesion of positive electrode)

The obtained positive electrode was cut into two rectangles of 90 mm×20 mm with the long axis in the coating direction. The peel strength was measured using a desktop tension tester (Strograph E3 commercially available from Toyo Seiki Co., Ltd.) and evaluated by a 180 degree peel test method. Specifically, a double-sided tape with a size of 100 mm×30 mm (No. 5000NS, commercially available from Nitoms Inc.) was attached onto a stainless steel plate, and the side of the mixture layer of the produced positive electrode was adhered to the other surface of a double-sided tape to obtain a test sample. Next, the test sample was vertically fixed so that the short sides of the rectangles were up and down and peeled off at a certain speed (50 mm/min) while pulling the end of the aluminum foil upward from below, and the average value of the stress at this time was used as the peel strength.

(Adhesion determination criteria)

◎: 1 N/cm or more (excellent)
O: 0.5 N/cm or more and less than 1 N/cm (good)
Δ: 0.3 N/cm or more and less than 0.5 N/cm (poor)
×: less than 0.3 N/cm (very poor)

[Table 4]

Table 4

| Example, Comparative Example | Conductive material dispersion | Positive electrode active material | | Conductive material | | Polymer | | PVdF | Positive electrode | Conductivity | Adhesion |
|---|---|---|---|---|---|---|---|---|---|---|---|
| | | Type | Solid component ratio (parts) | Type | Solid component ratio (parts) | Type | Solid component ratio (parts) | Solid component ratio (parts) | | | |
| Example 2-la | Dispersion 1 | NMC1 | 98.0 | 10B | 0.50 | Polymer 1 | 0.1 | 1.4 | Positive electrode 1a | O | ◎ |
| Example 2-2a | Dispersion 2 | NMC1 | 98.0 | 10B | 0.50 | Polymer 2 | 0.1 | 1.4 | Positive electrode 2a | ◎ | O |
| Example 2-3a | Dispersion 3 | NMC1 | 98.0 | 10B | 0.50 | Polymer 3 | 0.1 | 1.4 | Positive electrode 3a | ◎ | O |
| Example 2-4a | Dispersion 4 | NMC1 | 98.0 | 10B | 0.50 | Polymer 4 | 0.1 | 1.4 | Positive electrode 4a | O | O |
| Example 2-5a | Dispersion 5 | NMC1 | 98.0 | 10B | 0.50 | Polymer 5 | 0.1 | 1.4 | Positive electrode 5a | ◎ | O |
| Example 2-6a | Dispersion 6 | NMC1 | 98.0 | 10B | 0.50 | Polymer 6 | 0.1 | 1.4 | Positive electrode 6a | O | ◎ |
| Example 2-8a | Dispersion 8 | NMC1 | 98.0 | BT1003M | 0.50 | Polymer 2 | 0.1 | 1.4 | Positive electrode 8a | ◎ | ◎ |
| Example 2-9a | Dispersion 9 | NMC1 | 98.0 | 6A | 0.50 | Polymer 2 | 0.125 | 1.4 | Positive electrode 9a | ◎ | O |
| Example 2-10a | Dispersion 10 | NMC1 | 98.3 | TUBALL | 0.20 | Polymer 2 | 0.1 | 1.4 | Positive electrode 10a | ◎ | ◎ |
| Example 2-11a | Dispersion 11 | NMC1 | 95.9 | Li-400 | 2.00 | Polymer 2 | 0.06 | 2.0 | Positive electrode 11a | O | O |
| Example 2-12a | Dispersion 12 | NMC1 | 98.0 | 10B | 0.50 | Polymer 2 | 0.1 | 1.4 | Positive electrode 12a | ◎ | ◎ |
| Example 2-13a | Dispersion 13 | NMC1 | 98.0 | 10B | 0.50 | Polymer 2 | 0.1 | 1.4 | Positive electrode 13a | ◎ | O |

(continued)

| Example, Comparative Example | Conductive material dispersion | Positive electrode active material | | Conductive material | | Polymer | | PVdF | Positive electrode | Conductivity | Adhesion |
|---|---|---|---|---|---|---|---|---|---|---|---|
| | | Type | Solid component ratio (parts) | Type | Solid component ratio (parts) | Type | Solid component ratio (parts) | Solid component ratio (parts) | | | |
| Example 2-14a | Dispersion 14 | NMC1 | 98.0 | 10B | 0.50 | Polymer 2 | 0.1 | 1.4 | Positive electrode 14a | ◎ | ◎ |
| Example 2-15a | Dispersion 15 | NMC1 | 98.0 | 10B | 0.50 | Polymer 2 | 0.06 | 1.4 | Positive electrode 15a | O | O |
| Comparative Example 2-1a | Comparative dispersion 1 | NMC1 | 98.0 | 10B | 0.50 | Polymer 2 | 0.1 | 1.4 | Comparative positive electrode 1a | × | Δ |
| Comparative Example 2-2a | Comparative dispersion 2 | NMC1 | 98.0 | 10B | 0.50 | Polymer 2 | 0.1 | 1.4 | Comparative positive electrode 2a | × | × |
| Comparative Example 2-3a | Comparative dispersion 3 | NMC1 | 98.0 | 10B | 0.50 | Polymer 7 | 0.1 | 1.4 | Comparative positive electrode 3a | Δ | Δ |
| Comparative Example 2-4a | Comparative dispersion 4 | NMC1 | 98.0 | 10B | 0.50 | Polymer 8 | 0.10 | 1.4 | Comparative positive electrode 4a | × | × |

(Examples 2-2b to 2-15b and Comparative Examples 2-1b to 2-4b)

Positive electrodes 1b to 15b and comparative positive electrodes 1b to 4b were obtained in the same manner as in Example 2-1a except that the positive electrode active material was changed from NMC1 to NMC2 (S800, $LiNi_{0.8}Mn_{0.1}Co_{0.1}O_2$, commercially available from Kinwa, a non-volatile content of 100%). The conductivity and adhesion of the obtained positive electrodes exhibited same tendencies as those of the positive electrodes 1a to 15a and comparative positive electrodes 1a to 4a using the same conductive material dispersion.

<Production and evaluation of secondary battery>

(Production of standard negative electrode)

0.5 parts by mass of acetylene black (Denka Black (registered trademark) HS-100, commercially available from Denka Co., Ltd.), 1 part by mass of MAC500LC (carboxymethyl cellulose sodium salt Sunrose special type MAC500L, commercially available from Nippon Paper Industries Co., Ltd., a non-volatile content of 100%), and 98.4 parts by mass of water were put into a plastic container with a volume of 150 ml, and the mixture was then stirred at 2,000 rpm for 30 seconds using a rotation/revolution mixer (Awatori Rentaro, ARE-310 commercially available from Thinky Corporation). In addition, as the active material, 97 parts by mass of artificial graphite (CGB-20, commercially available from Nippon Graphite Industries, Co., Ltd.) was added, and the mixture was stirred at 2,000 rpm for 150 seconds using the rotation/revolution mixer (Awatori Rentaro, ARE-310 commercially available from Thinky Corporation). Subsequently, 3.1 parts by mass of SBR (styrene butadiene rubber, TRD2001, a non-volatile content of 48%, commercially available from JSR Corporation) was added, and the mixture was stirred at 2,000 rpm for 30 seconds using the rotation/revolution mixer (Awatori Rentaro, ARE-310 commercially available from Thinky Corporation) to obtain a standard negative electrode mixture composition. The non-volatile content of the standard negative electrode mixture composition was 50 mass%.

The above standard negative electrode mixture composition was applied onto a copper foil having a thickness of 20 $\mu$m as a collector using an applicator and then dried in an electric oven at 80°C±5°C for 25 minutes and the basis weight per unit area of the electrode was adjusted to 10 mg/cm$^2$. In addition, a rolling treatment was performed by a roll press (3t hydraulic roll press commercially available from Thank-Metal Co., Ltd.) to produce a standard negative electrode in which the density of the mixture layer was 1.6 g/cm$^3$.

(Examples 3-la to 3-15a and Comparative Examples 3-la to 3-4a)

(Production of secondary battery)

The positive electrodes and standard negative electrodes shown in Table 5 were used and cut into 50 mm×45 mm and 45 mm×40 mm, the cut positive electrode and standard negative electrode, and a separator (porous polypropylene film) inserted therebetween were inserted into an aluminum laminate bag, and drying was performed in an electric oven at 70°C for 1 hour. Then, in a glove box filled with argon gas, 2 mL of an electrolytic solution (a non-aqueous electrolytic solution obtained by preparing a mixed solvent in which ethylene carbonate, dimethyl carbonate and diethyl carbonate were mixed at a volume ratio of 1:1:1, additionally adding 1 part by mass of vinylene carbonate as an additive with respect to 100 parts by mass, and then dissolving $LiPF_6$ at a concentration of 1 M) was injected and the aluminum laminate was then sealed to produce secondary batteries.

(Method of evaluating rate property of secondary battery)

The obtained secondary batteries were put into a thermostatic chamber at 25°C and charging and discharging measurement was performed using a charging and discharging device (SM-8 commercially available from Hokuto Denko Corporation). After constant voltage and constant current charging (a cutoff current of 1 mA (0.02C)) was performed at a charging current of 10 mA (0.2C) and an end-of-charge voltage of 4.3 V, constant current discharging was performed at a discharging current of 10 mA (0.2C) and an end-of-discharge voltage of 3 V. After this operation was repeated three times, constant voltage and constant current charging (cutoff current of 1 mA (0.02C)) was performed at a charging current of 10 mA (0.2C) and an end-of-charge voltage of 4.3 V, and constant current discharging was performed at a discharging current of 0.2C and 3C until the end-of-discharge voltage reached 3.0 V, and respective discharging capacities were obtained. The rate property can be represented by the ratio of the 0.2C discharging capacity and the 3C discharging capacity according to the following Formula 1.

$$\text{(Formula 1) rate property} = \text{3C discharging capacity/3rd 0.2C discharging capacity} \times 100 (\%)$$

(Rate property determination criteria)

◎: 80% or more (excellent)
O: 60% or more and less than 80% (good)
Δ: 40% or more and less than 60% (poor)
×: less than 40% (very poor)

(Method of evaluating cycle property of secondary battery)

The obtained secondary battery was put into a thermostatic chamber at 25°C and charging and discharging measurement was performed using a charging and discharging device (SM-8 commercially available from Hokuto Denko Corporation). After constant voltage and constant current charging (a cutoff current of 2.5 mA (0.05C)) was performed at a charging current of 25 mA (0.5C) and an end-of-charge voltage of 4.3 V, constant current discharging was performed at a discharging current of 25 mA (0.5C) and an end-of-discharge voltage of 3 V. This operation was repeated 200 times. The cycle property can be represented by the ratio of the 3rd 0.5C discharging capacity and the 200th 0.5C discharging capacity at 25°C according to the following Formula 2.

$$\text{(Formula 2) cycle property} = \text{3rd 0.5C discharging capacity/200th 0.5C discharging capacity} \times 100 (\%)$$

(Cycle property determination criteria)

◎: 85% or more (excellent)
O: 80% or more and less than 85% (good)
Δ: 50% or more and less than 80% (poor)
×: less than 50% (very poor)

[Table 5]

Table 5

| Example, Comparative Example | Positive electrode | Rate property | Cycle property |
|---|---|---|---|
| Example 3-1a | Positive electrode 1a | O | O |
| Example 3-2a | Positive electrode 2a | ◎ | ◎ |
| Example 3-3a | Positive electrode 3a | ◎ | O |
| Example 3-4a | Positive electrode 4a | O | O |
| Example 3-5a | Positive electrode 5a | ◎ | ◎ |
| Example 3-6a | Positive electrode 6a | ◎ | O |
| Example 3-8a | Positive electrode 8a | ◎ | ◎ |
| Example 3-9a | Positive electrode 9a | ◎ | O |
| Example 3-10a | Positive electrode 10a | ◎ | ◎ |

(continued)

| Example, Comparative Example | Positive electrode | Rate property | Cycle property |
|---|---|---|---|
| Example 3-11a | Positive electrode 11a | O | O |
| Example 3-12a | Positive electrode 12a | ◎ | ◎ |
| Example 3-13a | Positive electrode 13a | ◎ | O |
| Example 3-14a | Positive electrode 14a | ◎ | ◎ |
| Example 3-15a | Positive electrode 15a | ◎ | O |
| Comparative Example 3-1a | Comparative positive electrode 1a | × | × |
| Comparative Example 3-2a | Comparative positive electrode 2a | × | × |
| Comparative Example 3-3a | Comparative positive electrode 3a | Δ | Δ |
| Comparative Example 3-4a | Comparative positive electrode 4a | × | × |

(Examples 3-1b to 3-15b and Comparative Examples 3-1b to 3-4b)

Batteries 1b to 15b and comparative batteries 1b to 4b were produced in the same manner as in Example 3-1a except that positive electrodes 1b to 15b and comparative positive electrodes 1b to 4b were used in place of the positive electrode 1a. The rate property and cycle property of the obtained batteries exhibited same tendencies as those of the batteries 1a to 15a and comparative batteries 1a to 4a using the same conductive material dispersion.

All of the positive electrodes using the conductive material dispersion according to the embodiment of the present invention favorable conductivity and adhesion. In addition, all of the batteries using the above positive electrodes had a favorable rate property and cycle property. It is thought that, when requirements of the present invention are satisfied, dispersion can be performed more uniformly while breaking fibers or structures as little as possible compared to conventional dispersion state determination methods, and this is the result of a well-developed conductive network formed in the electrode. Therefore, according to the present invention, it can be clearly understood that it is possible to provide a non-aqueous electrolyte secondary battery having a rate property and a cycle property that are difficult to achieve with conventional conductive material dispersions.

## Claims

**1.** A conductive material dispersion containing a conductive material, a polymer including an aliphatic hydrocarbon structural unit and a nitrile group-containing structural unit, and a dispersion medium,

wherein the conductive material contains at least one selected from the group consisting of carbon nanotubes and acetylene black,
wherein the polymer has a Mooney viscosity ($ML_{1+4,}$100°C) of 20 or more and 80 or less,
wherein the aliphatic hydrocarbon structural unit includes an alkylene structural unit, and the content of the aliphatic hydrocarbon structural unit based on the mass of the polymer is 40 mass% or more and less than 85 mass%, and the content of the nitrile group-containing structural unit based on the mass of the polymer is 15 mass% or more and 50 mass% or less, and
wherein a product (X×Y) of a complex elastic modulus X (Pa) and a phase angle Y (°) of the conductive material dispersion obtained by dynamic viscoelasticity measurement is 30 or more and 1,700 or less.

**2.** The conductive material dispersion according to claim 1,
wherein the complex elastic modulus obtained by the dynamic viscoelasticity measurement is 0.1 Pa or more and 500 Pa or less.

**3.** The conductive material dispersion according to claim 1 or 2,
wherein the phase angle obtained by the dynamic viscoelasticity measurement is 1° or more and 80° or less.

**4.** The conductive material dispersion according to any one of claims 1 to 3,
wherein a TI value measured with a type B viscometer is 1.5 to 5.0.

**5.** The conductive material dispersion according to any one of claims 1 to 4, wherein a median diameter is 0.4 μm or more and less than 5.0 μm.

**6.** The conductive material dispersion according to any one of claims 1 to 5, wherein the gloss of a film obtained by applying the conductive material dispersion onto a substrate and performing drying, which is measured at 60°, is 5 to 120.

**7.** A secondary battery electrode composition comprising the conductive material dispersion according to any one of claims 1 to 6.

**8.** An electrode film obtained by applying the secondary battery electrode composition according to claim 7.

**9.** A secondary battery comprising the electrode film according to claim 8.

**INTERNATIONAL SEARCH REPORT**

International application No.
**PCT/JP2022/018010**

**A. CLASSIFICATION OF SUBJECT MATTER**

***H01M 4/131***(2010.01)i; ***H01M 4/1391***(2010.01)i; ***H01M 4/62***(2006.01)i
FI: H01M4/1391; H01M4/62 Z; H01M4/131

According to International Patent Classification (IPC) or to both national classification and IPC

**B. FIELDS SEARCHED**

Minimum documentation searched (classification system followed by classification symbols)

H01M4/131; H01M4/1391; H01M4/62

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 6801806 B1 (TOYO INK SC HOLDINGS CO., LTD.) 16 December 2020 (2020-12-16) claims, paragraphs [0148]-[0149] | 1-9 |
| Y | WO 2017/010093 A1 (ZEON CORPORATION) 19 January 2017 (2017-01-19) claims, examples 1, 3, 5-9 | 1-9 |
| P, X | JP 2022-42689 A (TOYO INK SC HOLDINGS CO., LTD.) 15 March 2022 (2022-03-15) examples 1-5 | 1-9 |
| P, X | JP 2022-42691 A (TOYO INK SC HOLDINGS CO., LTD.) 15 March 2022 (2022-03-15) examples 1-5, 1-8 | 1-9 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 May 2022** | **14 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/018010**

| Patent document cited in search report | Publication date (day/month/year) | Patent family member(s) | Publication date (day/month/year) |
|---|---|---|---|
| JP 6801806 B1 | 16 December 2020 | WO 2021/080006 A1<br>claims, paragraphs [0148]-[0149]<br>JP 2021-72279 A | |
| WO 2017/010093 A1 | 19 January 2017 | US 2018/0198126 A1<br>claims, examples 1, 3, 5-9<br>EP 3324468 A1<br>KR 10-2018-0005259 A<br>CN 107710472 A<br>KR 10-2018-0093102 A | |
| JP 2022-42689 A | 15 March 2022 | (Family: none) | |
| JP 2022-42691 A | 15 March 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017010093 A
- JP 2018522803 A
- JP 2018534731 W
- JP 2018533175 W
- JP 2021070315 A